(19) Europäisches Patentamt
European Patent Office
Office européen des brevets

(11) **EP 4 293 435 A1**

(12) **EUROPEAN PATENT APPLICATION**

(43) Date of publication:
**20.12.2023 Bulletin 2023/51**

(21) Application number: **22179534.7**

(22) Date of filing: **17.06.2022**

(51) International Patent Classification (IPC):
**G05B 17/02** (2006.01)     **G01N 1/40** (2006.01)

(52) Cooperative Patent Classification (CPC):
**G05B 17/02; G01N 1/34; G01N 35/1016;**
G01N 2035/00475

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **The Automation Partnership (Cambridge) Ltd.**
**Hertfordshire SG8 5WY (GB)**

(72) Inventors:
• **EDWARDS, James**
  **Royston, SG8 9TH (GB)**
• **BARGH, Adrian Neil**
  **Cambridge, CB29FQ (GB)**

(74) Representative: **Müller-Boré & Partner**
**Patentanwälte PartG mbB**
**Friedenheimer Brücke 21**
**80639 München (DE)**

(54) **COMPUTER-IMPLEMENTED METHOD, COMPUTER PROGRAM PRODUCT, CONTROL DEVICE AND SYSTEM FOR CONTROLLING A SAMPLE PREPARATION SYSTEM**

(57)     A computer-implemented method is provided for controlling a sample preparation system (1) for preparing a chemical, pharmaceutical and/or biotechnological sample, the sample preparation system (1) comprising a fluid path and at least one consumable (2a) such as a filter provided on the fluid path. The method comprises: controlling the sample preparation system (1) so that sample fluid including a target substance flows within the fluid path through the at least one consumable (2a); obtaining (S14) system information; determining (S16) a regression function using the system information obtained with respect to a specified time period preceding a current point in time ($t_{current}$); determining (S18) whether or not a first specified condition is met, wherein the first specified condition is determined to be met when a value indicative of a predicted blockage amount (Vpb) corresponds to an amount (Vin_$t_{current}$) of the sample fluid that has been introduced into the fluid path at the current point in time ($t_{current}$), wherein the predicted blockage amount (Vpb) is a value of an independent variable (x) of the regression function when a value of a dependent variable (y) is a specified maximum differential pressure; in case the first specified condition is met, controlling (S20) the sample preparation system (1) to stop introducing the sample fluid into the fluid path; in case the first specified condition is not met, controlling the sample preparation system (1) to continue introducing the sample fluid into the fluid path, and repeating the steps of obtaining (S14) system information, determining (S16) the regression function and determining (S18) whether or not the first specified condition is met.

FIG 1

**Description**

The application relates to a computer-implemented method, a computer program product, a control device and a system for controlling a sample preparation system.

**BACKGROUND**

In order to yield a target substance such as a protein by purification, a sample containing the target substance usually needs to be subjected to a clarification step prior to purification which removes contaminants including host cell-derived contaminants, such as whole cells, cell debris, host cell nucleic acids and host cell proteins, culture medium-derived contaminants, such as proteinaceous and non-proteinaceous medium components, and vector-derived contaminants, including vector nucleic acids and viral vectors. In the clarification step, for example, a sample may be filtered with a filter.

Allowing as little target substance as possible to be left within a sample preparation system configured to process the sample (e.g., within the filter used in the sample preparation system, within a fluid path comprised in the sample preparation system, etc.) may be desirable for obtaining a high yield for the target substance.

**SUMMARY**

According to an aspect, the problem relates to improving efficiency of yielding a target substance contained in a sample. The problem is solved by the features disclosed by the independent claims. Further exemplary embodiments are defined by the dependent claims.

According to an aspect, a computer-implemented method is provided for controlling a sample preparation system for preparing a chemical, pharmaceutical and/or biotechnological sample, the sample preparation system comprising a fluid path and at least one consumable such as a filter provided on the fluid path. The method comprises:

controlling the sample preparation system so that sample fluid including a target substance flows within the fluid path through the at least one consumable, wherein the sample fluid is allowed to pass an upstream point within the fluid path, the at least one consumable and a downstream point within the fluid path in this order;
obtaining system information at least indicative of:

an amount of the sample fluid that has been introduced into the fluid path;
an upstream pressure at the upstream point; and
a downstream pressure at the downstream point;

determining a regression function using the system information obtained with respect to a specified time period ($\Delta t$) preceding a current point in time ($t_{current}$), the regression function being determined by assuming that:

differential pressures ($dP\_t_i-\Delta t, \ldots , dP\_t_i$) across the at least one consumable, based on upstream pressures and downstream pressures,
obtained for different points in time ($t_i-\Delta t, \ldots, t_i$) within the specified time period ($\Delta t$) are values of a dependent variable (y) of the regression function, and
amounts ($Vin\_t_i-\Delta t, \ldots, Vin\_t_i$) of the sample fluid introduced into the fluid path obtained for different points in time ($t_i-\Delta t, \ldots, t_i$) within the specified time period ($\Delta t$) are values of an independent variable (x) of the regression function;

determining whether or not a first specified condition is met, wherein the first specified condition is determined to be met when a value indicative of a predicted blockage amount (Vpb) corresponds to the amount ($Vin\_t_{current}$) of the sample fluid that has been introduced into the fluid path at the current point in time ($t_{current}$), wherein the predicted blockage amount (Vpb) is a value of the independent variable (x) of the regression function when a value of the dependent variable (y) is a specified maximum differential pressure;
in case the first specified condition is met, controlling the sample preparation system to stop introducing the sample fluid into the fluid path;
in case the first specified condition is not met,
controlling the sample preparation system to continue introducing the sample fluid into the fluid path, and

repeating the steps of obtaining system information, determining the regression function and determining whether or not the first specified condition is met.

In various aspects and embodiments described herein, the "fluid path" may be formed with at least one or more tubes, for example. In some exemplary embodiments, the material of the tube(s) may be selected from a plastic polyvinyl chloride, polypropylene, polyethylene, polytetrafluoroethylene, and fluorinated ethylene propylene. Thereby, the tube(s) can provide flexibility and chemical resistance.

In various aspects and embodiments described herein, the "at least one consumable" may be a filter. More specifically, the "at least one consumable" may be a clarification filter for clarifying the sample fluid comprising the target substance. In some exemplary embodiments, the "clarification filter" may be a depth filter and/or a membrane, preferably a depth filter. Further, in some circumstances, the "clarification filter" may be a cell culture clarification filter that is configured to separate cells and other contaminants from a sample.

In various aspects and embodiments described herein, the at least one consumable may be a single use consumable. The term "single use consumable" used herein means that the consumable cannot be cost effectively recovered after it has been used due to e.g. filter blockage and is thrown away.

In various aspects and embodiments described herein, the "target substance" is not specifically limited. For example, the target substance may be any biomolecule of interest, such as proteins, such as antibodies, hormones, vaccines, nucleic acids, exosomes, and viruses, and virus-like particles. In some exemplary embodiments, the target substance may be an antibody, more specifically a monoclonal antibody (mAb), or fragments or derivatives thereof, or nanobodies. Examples of monoclonal antibodies may include, but are not limited to, adalimumab, cetuximab, rituximab, infliximab, omalizumab, and denosumab. The target substance can be obtained, for example, from mammalian cells, bacteria cells or insect cells, media and cell lines, such as "Chinese hamster ovary cells" (CHO cells), HeLa, or human umbilical vein endothelial cells (HUVEC).

In various aspects and embodiments described herein, the "sample fluid" is not particularly limited as long as it contains a plurality of components, wherein at least one component of the plurality of components of the sample fluid is one of the above-described target substances. The further (impurity) components (contaminants) are not particularly limited and may depend on the preparation conditions of the target substance. Examples of further components may include, but are not limited to, aggregates, host cell proteins, deoxyribonucleic acid, as well as fragments and charge variants thereof. The sample fluid may be obtained by applying any biological, biochemical, chemical, or pharmaceutical method. Thereby, the sample fluid can be obtained by previously conducting purification methods applying different purification units. For example, the target substance can be produced by appropriate cell lines, such as CHO cell lines e.g. by perfusion cultivation.

In various aspects and embodiments described herein, at least some of the "system information" may be obtained from sensors arranged at positions that are appropriate for collecting respective pieces of system information, with respect to the sample preparation system. Further, in various aspects and embodiments described herein, at least some of the "system information" may be obtained by accessing a storage medium storing the relevant piece(s) of the system information. The storage medium may be either within or external to a control device that is configured to perform the method according to any one of the various aspects and embodiments described herein.

For example, the system information indicative of the amount of the sample fluid that has been introduced into the fluid path may be obtained from a rotation speed sensor provided on a pump that is configured to move the sample fluid within the fluid path, where the rotation speed sensor can measure the rotation speed of the pump. Since the amount of the sample fluid that has been introduced into the fluid path may be proportional to an amount of rotations of the pump, the amount of the sample fluid can be calculated from the measured rotation speed of the pump (e.g., by multiplying the rotation speed by time elapsed since start of a sample preparation process performed by the sample preparation system). In various aspects and embodiments described herein, the "amount" of fluid (e.g., the sample fluid) may be understood as a volume of the fluid. In some exemplary embodiments, the amount of rotations of the pump for calculating the amount of the sample fluid that has been introduced into the fluid path may be obtained without a rotation speed sensor. For example, a calibrated value for rotation of the pump (e.g., driven by a DC motor or a stepper motor) may be obtained from the storage medium as stated above and the amount of the sample fluid may be calculated using the obtained calibrated value for the rotation of the pump.

Further, for example, the system information indicative of the upstream pressure and the downstream pressure may be obtained from a pressure sensor provided at the upstream point and a pressure sensor provided at the downstream point, respectively. Regarding the downstream pressure, however, in some exemplary embodiments, may be an atmospheric pressure, rather than a pressure measured by the pressure sensor provided at the downstream point. In such exemplary embodiments, the storage medium as stated above may store a value of the atmospheric pressure and the value of the atmospheric pressure as the downstream pressure may be obtained from the storage medium, for example.

In various aspects and embodiments described herein, the "specified time period" $\Delta t$ may be specified by a unit of time (e.g., seconds, minutes, etc.) and/or by a change of the amount (e.g., volume) of fluid introduced into the fluid path. In case of specifying the "specified time period" by the change of the amount of fluid introduced into the fluid path, the "specified time period" of x ml may be expressed as $\Delta t = x$ ml and may indicate a time period during which x ml of fluid is introduced into the fluid path, for example. The amount of fluid introduced into the fluid path may be calculated, for example, from the rotation speed of the pump as stated above. It is noted that, when the "specified time period" is specified by the change of the amount of fluid introduced into the fluid path, the actual time passed in the "specified time period" of the same amount of fluid may vary in different iterations of the steps of obtaining system information, determining the regression function and determining whether or not the first specified condition is met.

Further, in various aspects and embodiments described herein, each of the "current point in time" $t_{current}$ and "different points in time", e.g., $t_i - \Delta t, ..., t_i$ etc. (i = 0, 1, 2, ...), may be represented by the unit of time (e.g., x seconds, minutes, etc. from start of a sample preparation process performed by the sample preparation system) and/or an amount (e.g., volume) of fluid that has been introduced into the fluid path up to the relevant point in time since the start of the sample preparation process. Thus, in the present disclosure, the "current point in time" $t_{current}$ may also be understood as the current amount of fluid that has been introduced into the fluid path. More in general, a point in time $t_i$ may also be understood as the amount of fluid that has been introduced into the fluid path up to that point in time.

In some exemplary embodiments, the system information "obtained with respect to" the specified time period $\Delta t$ preceding the current point in time $t_{current}$ may include one or more pieces of the system information obtained during the specified time period $\Delta t$. Additionally, in some exemplary embodiments, the system information "obtained with respect to" the specified time period $\Delta t$ may further include one or more pieces of the system information obtained outside the specified time period $\Delta t$ but are considered to be applicable for the specified time period $\Delta t$. For example, in case the atmospheric pressure is obtained as the downstream pressure without a pressure sensor at the downstream point, the atmospheric pressure does not necessarily need to be obtained "during" the specified time period $\Delta t$ but the obtained atmospheric pressure may be considered as the downstream pressure also during the specified time period $\Delta t$.

In various aspects and embodiments described herein, a "differential pressure across the at least one consumable" at a particular point in time $t_i$ may be obtained by calculating a difference between the downstream pressure at the particular point in time $t_i$ and the upstream pressure at the particular point in time $t_i$.

In various aspects and embodiments described herein, the specified time period $\Delta t$ preceding the current point in time $t_{current}$ may include a discrete number of points in time. The discrete number of points in time may correlate or depend on the sampling rate of the sensors involved such as the pressure sensors. Further, the specified time period $\Delta t$ preceding the current point in time $t_{current}$ may indicate a time period from a point in time $t_i - \Delta t$ to a point in time $t_i$, where $t_i$ may be the current point in time $t_{current}$ or a point in time before the current point in time $t_{current}$. In some exemplary embodiments, $t_i$ may be a single point before the current point in time $t_{current}$, in other words, immediately before the current point in time $t_{current}$. In some other exemplary embodiments, $t_i$ may be further away from the current point in time $t_{current}$ than a single point and preferably within a certain fraction (e.g., 1/10) of an expected total time (or the total amount of sample fluid) for the sample preparation process.

In some exemplary embodiments, the "specified time period", the "specified maximum differential pressure" and the "first specified condition" may be specified by a user using an input device.

In some exemplary embodiments, the "first specified condition" may be determined to be met (in other words, the value indicative of the predicted blockage amount (Vpb) may be considered to correspond to the amount (Vin_$t_{current}$) of the sample fluid that has been introduced into the fluid path at the current point in time) when a difference between the "value indicative of the predicted blockage amount (Vpb)" and the "amount (Vin_$t_{current}$) of the sample fluid that has been introduced into the fluid path at the current point in time" is equal to or smaller than a specified threshold. The "first specified condition" may be determined to be not met (in other words, the value indicative of the predicted blockage amount (Vpb) may be considered not to correspond to the amount (Vin_$t_{current}$) of the sample fluid), on the other hand, when the difference is greater than the "specified threshold".

In various aspects and embodiments described herein, the "amount of the sample fluid (Vin_$t_{current}$) that has been introduced into the fluid path at the current point in time ($t_{current}$)" may be understood as an amount of the sample fluid that is currently in the fluid path.

In various aspects and embodiments described herein, the "predicted blockage amount" may be considered as an amount of the sample fluid that can block the flow through the at least one consumable (e.g., filter) when committed into the at least one consumable. Thus, controlling the sample preparation system to stop introducing the sample fluid into the fluid path in case the specified threshold is met as in the method according to the above-stated aspect can reduce an amount of the sample fluid that is introduced into the fluid path but cannot pass through the at least one consumable, in other words, reduce an amount of the sample fluid that may be wasted. This may contribute to improving efficiency of yielding the target substance included in the sample fluid.

In some exemplary embodiments, the method according to the above-stated aspect may further comprise: in case the first specified condition is met, further controlling the sample preparation system so that rinse liquid flows within the fluid path through the at least one consumable.

By the flow of the rinse liquid, the sample fluid still present within the fluid path upstream of the at least one consumable and/or the sample fluid that is still contained within the at least one consumable can be pushed to pass through the at least one consumable. This may contribute to increasing the yield of the target substance in the sample fluid.

In some exemplary embodiments, the method according to the above stated aspect may further comprise:

in case the first specified condition is met, further controlling the sample preparation system so that air flows within the fluid path through the at least one consumable.

By the flow of the air, the sample fluid that is still present within the fluid path before reaching the at least one consumable (in other words, the sample fluid still present within the fluid path upstream of the at least one consumable) and/or the sample fluid that is still contained within the at least one consumable can be pushed to pass through the at least one consumable. This may contribute to increasing the yield of the target substance in the sample fluid.

In some exemplary embodiments, the method according to the above-stated aspect may further comprise:
In case the first specified condition is met, further controlling the sample preparation system to remove the at least one consumable from the fluid path.

Moreover, the method according to the above-stated aspect may further comprise:
after controlling the sample preparation system to remove the at least one consumable from the fluid path, controlling the sample preparation system to provide a new consumable on the fluid path.

The controlling of the sample preparation system to provide a new consumable on the fluid path may be performed in case a second specified condition is met. The second specified condition may include a condition regarding an amount of remaining sample fluid to be processed by the sample preparation system. For example, a threshold for the amount of the remaining sample fluid may be specified (e.g., by a user) and the second specified condition is determined to be met in case the amount of the remaining sample fluid is above the threshold. Further, in some exemplary embodiments, the threshold for the amount of the remaining sample may be determined by a control device configured to control the sample preparation system.

In some exemplary embodiments, the at least one consumable may be a filter. In such exemplary embodiments, the sample preparation system may further comprise a filter handling device configured to:

    receive the at least one consumable provided on the fluid path; and
    provide the at least one consumable on the fluid path.

Further, the controlling of the sample preparation system to remove the at least one consumable from the fluid path may include outputting, to the filter handling device, a control signal to remove the at least one consumable from the fluid path by receiving the at least one consumable. Further, the controlling of the sample preparation system to provide the new consumable on the fluid path may include outputting, to the filter handling device, a control signal to provide the new consumable on the fluid path.

In some exemplary embodiments, the sample preparation system may further comprise a pump configured to move fluid within the fluid path. The pump may be a peristaltic pump, a diaphragm pump or a piston pump, for example. In the exemplary embodiments where the sample preparation system further comprises the pump, the controlling of the sample preparation system so that the sample fluid flows within the fluid path through the at least one consumable may include outputting, to the pump, a control signal to move the sample fluid within the fluid path towards the at least one consumable. Further, the controlling of the sample preparation system to stop introducing the sample fluid into the fluid path may include outputting, to the pump, a control signal to stop moving the sample fluid within the fluid path.

In some exemplary embodiments, the sample preparation system may further comprise a valve configured to switch between at least:

    an open state in which the sample fluid is allowed to flow within the fluid path towards the at least one consumable; or
    a closed state in which the sample fluid is prevented from flowing within the fluid path towards the at least one consumable.

In the exemplary embodiments where the sample preparation system further comprises the valve as stated above, the controlling of the sample preparation system so that the sample fluid flows within the fluid path through the at least one consumable may include outputting, to the valve, a control signal to set the valve to the open state. Further, the controlling of the sample preparation system to stop introducing the sample fluid into the fluid path may include outputting, to the valve, a control signal to set the valve to the closed state.

In some exemplary embodiments, the valve may be a 3-way valve (e.g., a 3-way diaphragm valve or a 3-way ball valve) that has three ports (e.g., first, second and third ports) and can switch between three states, a closed state in which fluid is prevented from flowing through the valve, a first opened state in which fluid is allowed to flow from a first port to a second port (or vice versa), or a second opened state in which fluid is allowed to flow from the first port to the third port (or vice versa). In such exemplary embodiments, the first port of the 3-way valve may be connected to a source of the sample fluid and either the second port or the third port of the 3-way valve may be connected to a part of the fluid path that leads to the at least one consumable, for example. The remaining port of the 3-way valve may be connected to, for example, another part of the fluid path that leads to a waste vessel of the sample preparation system.

In some exemplary embodiments, the determining of the regression function may include:

obtaining one or more values of one or more parameters relating to the sample fluid and/or the sample preparation system;

generating, for each one of the one or more parameters, an equation to determine a blockage amount as a function of the one of the one or more parameters, the blockage amount indicating an amount of the sample fluid that can cause the at least one consumable to block flow of the sample fluid when introduced into the at least one consumable;

determining, for each one of the one or more parameters, a coefficient indicating a ratio between:

the amount (Vin_$t_{current}$) of the sample fluid that has been introduced into the fluid path at the current point in time ($t_{current}$) or a total amount of the sample fluid to be introduced into the fluid path, and

the blockage amount obtained using the generated equation; and

determining the regression function using the coefficient determined for each one of the one or more parameters. In such exemplary embodiments, the one or more parameters may include one or more of the following:

cell density of the sample fluid;
turbidity of the sample fluid;
particle size distribution of the sample fluid;
optical density of the sample fluid;
filter resistance index, where the at least one consumable is a filter;
filter surface area, where the at least one consumable is a filter.

In some exemplary embodiments, the one or more values of the one or more parameters may be stored in and obtained from the storage medium as stated above (e.g., within or external to the control device configured to control the sample preparation system).

Further, the determining of the regression function using the coefficient determined for each one of the one or more parameters may include:

determining a sensitivity factor using the coefficient determined for each one of the one or more parameters; and
select, from among a plurality of types of regression functions, one type of regression function to be used as the regression function, based on the sensitivity factor.

In various aspects and embodiments described herein, the sample preparation system may be for preparing a sample that is a cell culture comprising a protein. In such cases, the sample fluid may be the cell culture and the protein comprised in the cell culture may be the target substance.

According to another aspect, a computer program product is provided. The computer program product comprises computer-readable instructions that, when loaded and run on a suitable system, cause the system to perform the method according to any one of the above-stated aspect and exemplary embodiments thereof.

According to yet another aspect, a control device is provided. The control device comprises:

a processor configured to perform the method according to any one of the above-stated aspect and exemplary embodiments thereof; and
a storage medium in communication with the processor.

According to yet another aspect, a system is provided. The system comprises:
a sample preparation system comprising:

a fluid path, and
at least one consumable such as a filter provided on the fluid path; and the control device according to the above-stated aspect.

Various aspects and embodiments described herein can be applied to single pass filtration of a biopharmaceutical cell suspension, for example, a small-scale clarification of mAb-expressing mammalian suspension cell cultures. Since cell suspension may have a high loading of particulates and a clarification process over seconds or minutes can already cause filter blockage, pressure change over the last few seconds or minutes (or last few ml depending on the scale) may be critical in predicting the filter blockage. Setting the "specified time period" to few seconds or minutes in various aspects and embodiments described herein, for example, can enable prediction of the filter blockage in such a clarification process. Further, in such a clarification process, a volume of cell suspension in the (depth) filter and supply tubing may be a significant proportion of the volume to be filtered. Further, the volume of cell suspension in the (depth) filter and supply tubing may be significant in causing filter blockage. Various aspects and embodiments described herein may take such a volume into consideration (as the amount of the sample fluid that has been introduced into the fluid path) for predicting filter blockage.

Moreover, in single pass filtration of a biopharmaceutical cell suspension, the value of the product (e.g., the target substance) in the filter (e.g., depth filter) may be significant. Even if blockage does not occur, a small amount (e.g., 5 to 20%) of the product can always be trapped in each filter at the end of filtration. Accordingly, an accurate prediction of blockage may be important. If the prediction is too conservative, then more filters will be used resulting in more product loss. If the prediction is not conservative enough, then blocking is more likely resulting in a greater product loss (e.g., perhaps 50% product loss).

Further, various aspects and embodiments described herein can accommodate for a (user-definable) volume of non-fouling rinse liquid to follow the committed input liquid in order to achieve maximum recovery of the product.

Various aspects and embodiments described herein may be compatible with a simultaneous clarification and purification process as used on the sample preparation system.

Various aspects and embodiments described herein may be used for any clarification applications, where the appropriate control systems are available.

Further, various aspects and embodiments described herein may be used for any application using a dead-end filter that can block and where optimal recovery is desired.

Further, various aspects and embodiments described herein may be applicable to microbial cultures, cultures at different scales and as a method or system of fractionating the output.

Since various aspects and embodiments described herein do not rely on historical data for determining the regression function, any one of various aspects and embodiments described herein can provide flexible, robust and real-time control of the sample preparation system, which may be ideal for R&D and early process development. The lot-to-lot variability of filters (particularly at a smaller scale) and indeed the cultures themselves can reduce the impact of a pre-determined model. The adaptive nature of various aspects and embodiments described herein can adapt to such variabilities.

Any one of various aspects and embodiments described herein can provide one or more of the following technical effects:

- achieving optimal ratio of output volume to contaminant concentration;
- obtaining maximum product recovery from the consumable (e.g., a filter), where the consumable may have become fully blocked before the end of the rinse;
- optimising the efficiency of the clarification process to provide the highest volume and quality of output sample with the minimum possible time requirement and the maximum sample/time/cost;
- fully automating the sample preparation process, reducing operator time requirement.

The subject matter described in the application can be implemented as a method or as a system, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. In some examples, the system may be a general purpose computer system. In other examples, the system may be a special purpose computer system including an embedded system.

## BRIEF DESCRIPTION OF THE DRAWINGS

Details of one or more implementations are set forth in the exemplary drawings and description below. Other features will be apparent from the description, the drawings, and from the claims. It should be understood, however, that even though embodiments are separately described, single features of different embodiments may be combined to further embodiments.

**Fig. 1** shows an exemplary sample preparation system.

**Fig. 2** shows side views of a part of the exemplary sample preparation system.

**Fig. 3** shows an exemplary filter handling device comprised in the exemplary sample preparation system.

**Fig. 4** shows an exemplary pipetting robot and an exemplary pipette wash station that may be used in the exemplary sample preparation system.

**Fig. 5** shows a diagram illustrating flow of control signals and sensor signals between an exemplary control device and the exemplary sample preparation system.

**Fig. 6** shows a graph of exemplary recorded online data obtained by running the exemplary sample preparation system without a control process according to the present disclosure.

**Fig. 7** shows a flowchart of an exemplary process for controlling a sample preparation system.

**Fig. 8** shows a graph of exemplary recorded online data obtained by running the exemplary sample preparation system controlled with the control process according to the present disclosure.

**Fig. 9** shows a graph of further exemplary recorded online data obtained by running the exemplary sample preparation system controlled with the control process according to the present disclosure.

**Fig. 10** shows a graph showing blockage volume of a filter provided on a fluid path of the sample preparation system, predicted in the control process according to the present disclosure.

**Fig. 11** shows an exemplary hardware configuration of a computer that may be used to implement at least a part of a system according to the present disclosure.

## DETAILED DESCRIPTION OF EMBODIMENTS

In the following text, a detailed description of examples will be given with reference to the drawings. It should be understood that various modifications to the examples may be made. In particular, one or more elements of one example may be combined and used in other examples to form new examples.

## Sample Preparation System

In the present disclosure, a sample preparation system may be understood as a system for preparing a chemical, pharmaceutical and/or biotechnological sample, in order to, for example, yield a target substance contained in the sample. For example, a sample may be a cell culture comprising a protein as a target substance.

In some exemplary embodiments, the sample preparation system may be configured to perform one or more unit operations such as clarification and purification on a sample. For each of the one or more unit operations, a consumable such as a filter may be provided on the sample preparation system. For example, a clarification filter may be provided for clarification. Further, for example, a purification filter or a purification chromatography column may be provided for purification. More specifically, the sample preparation system may comprise a fluid path and one or more consumables for the one or more unit operations may be provided on the fluid path so that sample fluid containing a target substance can flow within the fluid path through the one or more consumables and be subject to the one or more unit operations.

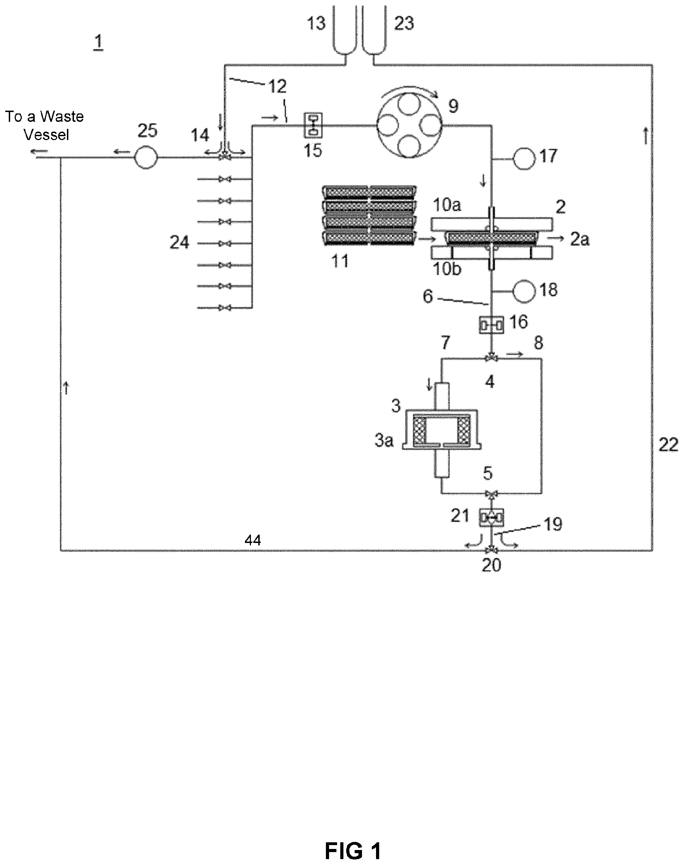

In the following, exemplary embodiments will be described with regards to an exemplary sample preparation system configured to perform clarification and/or purification on a sample, as shown in **Fig. 1.** It should be noted, however, various aspects and embodiments described herein may also be used for controlling a sample preparation system having a configuration different from that of the exemplary sample preparation system shown in Fig. 1.

Fig. 1 shows the exemplary sample preparation system configured to perform clarification and/or purification on a sample. As shown in Fig. 1, the sample preparation system 1 may comprise a fluid path including an input line 12, a first line 6, a second line 7, a third line 8, a fourth line 19, an output line 22 and/or a waste vessel line 44. Some or all the lines 12, 6, 7, 8, 19, 22 and 44 may be made of flexible tubes with chemical resistance. In the sample preparation system 1, fluid (e.g., sample fluid including the target substance) may flow within the fluid path in directions indicated with arrows shown in Fig. 1. In the following, the term, "upstream", with respect to a reference point in the fluid path may be understood as any point in a part of the fluid path the fluid can pass from a source of the fluid up to the reference point as the fluid flows. Further, the term, "downstream", with respect to the reference point may be understood as any point in a part of the fluid path the fluid can pass after the fluid has passed the reference point as the fluid flows.

Further, the sample preparation system 1 may comprise a serial arrangement of a first means 2 configured to be connected to a first consumable 2a and a second means 3 configured to be connected to a second consumable 3a. In the specific example of Fig. 1, the first consumable 2a is a clarification filter and the second consumable 3a is purification filter or a purification chromatography column. The clarification filter may be a depth filter and/or a membrane.

The purification filter may be a membrane and the purification chromatography column may contain functionalized beads, for example. The second consumable 3a may be configured to bind and elute the target substance. The second means 3 may be located downstream of the first means 2 in the sample preparation system 1, and the first means 2 and the second means 3 may be integrally connected with each other in the sample preparation system 1. The term "integrally connected" used herein means arranged within one device (e.g., within the sample preparation system 1), and not arranged in separate devices.

The sample preparation system 1 may be configured to carry out clarification as a first unit operation and purification as a second unit operation in combination in an automated way in one device. Thus, the respective method can be fast and have a significantly improved process efficiency compared to methods which are performed in two separate devices.

In the sample preparation system 1, sample fluid may be introduced into the input line 12 arranged upstream of the first means 2 from an input cup 13 configured to hold fluid, e.g., the sample fluid to be prepared by the sample preparation system 1. In some exemplary embodiments, the input cup may have a volume of from 10 ml to 150 ml, preferably from 20 ml to 80 ml. The input line 12 may provide fluidic communication between the first means 2 and the input cup 13.

Further, in the sample preparation system 1, an input sample valve 14 may be provided downstream of the input cup 13 and upstream of the first means 2 on the input line 12. Accordingly, the input sample valve 14 may divide the input line 12 into a part being upstream of the input sample valve 14 and into a part being downstream of the input sample valve 14. The input sample valve 14 may be configured to direct fluid to the input line 12 downstream of the input sample valve 14 or to a waste vessel (not shown). For example, in case fluid is directed to the input line 12 downstream of the input sample valve 14, the flow of fluid to the waste vessel may be blocked. Further, for example, in case fluid is directed to the waste vessel, the flow of fluid to the input line 12 downstream of the input sample valve may be blocked. The input sample valve 14 may be a 3-way valve (e.g., a 3-way diaphragm valve or a 3-way ball valve).

Further, the sample preparation system 1 may comprise process fluid input valves 24 arranged upstream of the first means 2. Each of the process fluid input valves 24 may be a 2-way valve that may switch between an open state allowing fluid to flow through the valve or a closed state preventing fluid from flowing through the valve. Each kind of process fluid may, for example, be stored in a bottle and connected to one of the process fluid input valves 24 by a line. Each of the process fluid input valves 24 may allow or stop flow of the corresponding kind of process fluid towards the input line 12.

Different kinds of process fluid that may flow into the input line 12 via the process fluid input valves 24 may include, for example, fluid used for cleaning the sample preparation system 1 and/or fluid used in the clarification and/or purification. Examples of the process fluid used for cleaning the sample preparation system 1 may include, but are not limited to, a buffer, sodium hydroxide and/or water. In the specific example shown in Fig. 1, the process fluid input valves 24 include at least valves for allowing or stopping flow of rinse liquid and air.

Further examples of the process fluid may include, but are not limited to, phosphate-buffered saline (PBS), elution buffer, a low pH strip buffer, etc. The elution buffer is not particularly limited, and the choice thereof may depend on the substance to be eluted. The elution buffer may, for example, be selected from a citrate buffer, a glycine/HCl buffer and an acetate buffer.

Further, the sample preparation system 1 may comprise a pump 9 provided on the input line 12 downstream of the input sample valve 14 and of the process fluid input valves 24. Further, the pump 9 may be provided upstream of the first means 2. The pump 9 may be configured to move fluid within the fluid path of the sample preparation system 1. In the specific example of Fig. 1, the pump 9 is a peristaltic pump. In other exemplary embodiments, the pump 9 may be a diaphragm pump or a piston pump.

The input line 12 may provide fluidic communication between the first means 2 and one or more of: the input sample valve 14 and the process fluid input valves 24.

In the specific example of Fig. 1, the first means 2 is a first filter holder comprising a first clamp 10a configured to clamp the first consumable 2a (e.g., clarification filter) on the upper face (in other words, an upstream surface) and a second clamp 10b configured to clamp the first consumable 2a on the lower face (in other words, a downstream surface). Thereby, the first consumable 2a can be securely supported against the internal pressure during operation. Each of the first clamp 10a and the second clamp 10b may comprise an O ring which is configured to connect the fluid path upstream and downstream of the first means 2 when the O ring is in a compressed state (in other words, when the clamps are closed). In some exemplary embodiments, one of the first clamp 10a and the second clamp 10b may be a static clamp (in other words, it does not move), while the other is a movable clamp. Thereby, the first consumable 2a can be clamped by pressing the movable clamp against the static clamp. Preferably, the first clamp 10a may be the static clamp, and the second clamp 10b may be the movable clamp.

In some exemplary embodiments, the first means 2 does not necessarily be the first filter holder with the first and second clamps 10a, 10b as described above. For example, the first means 2 may be an upstream end part of the first line 6 which supports the first consumable 2a from its downstream side. In case that the first consumable 2a is supported from its downstream side by the upstream end part of the first line 6, the first consumable 2a may be supported on its upstream side by a downstream end part of the input line 12 which is connected to the first means 2.

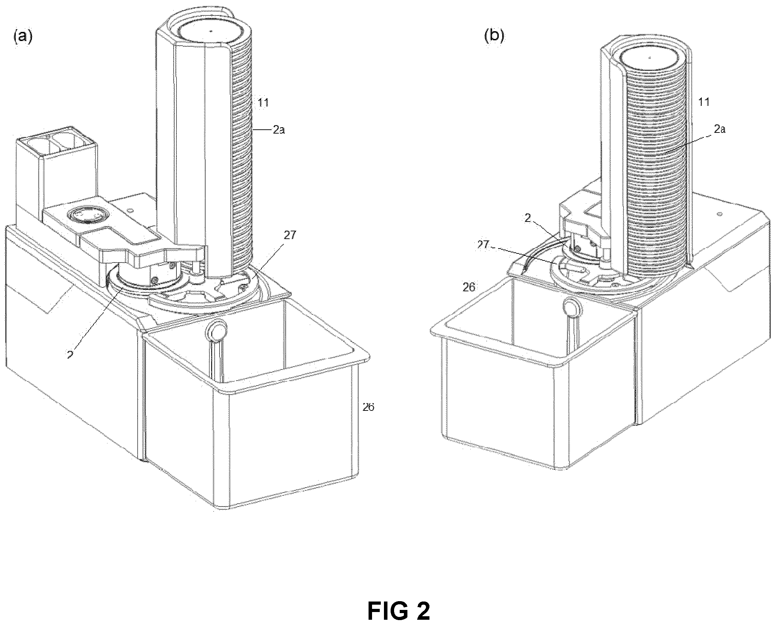

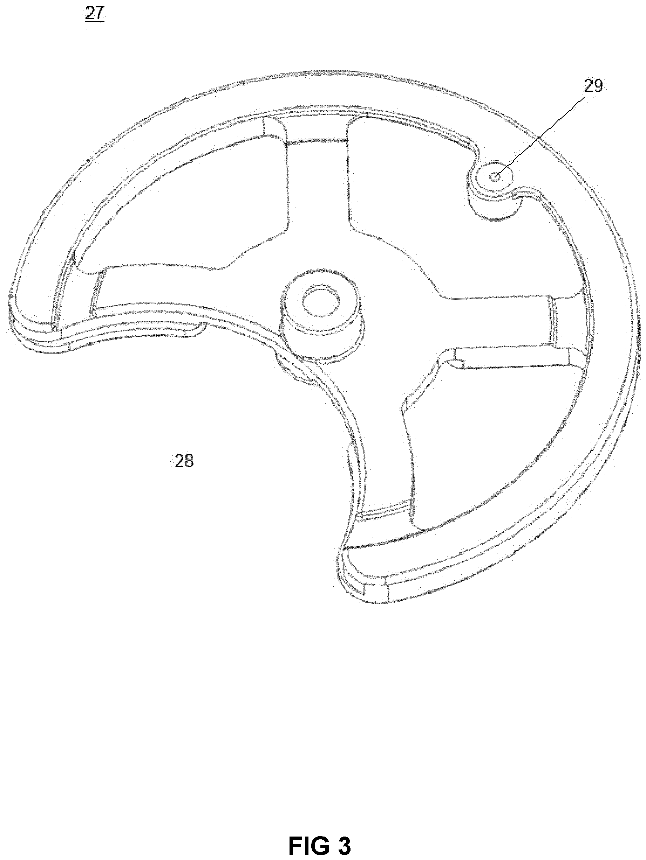

Further, the sample preparation system 1 may comprise an input stack 11 configured to hold at least one first consumable 2a. In some exemplary embodiments, the input stack 11 may be configured to hold from 1 to 150 first consumables 2a, preferably from 1 to 50 first consumables 2a. The sample preparation system 1 may further comprise a filter handling device (not shown in Fig. 1) that may be connected to the first means 2. The filter handling device may be configured to provide a first consumable 2a to the first means 2 and to receive a first consumable 2a from the first means 2. Details of the filter handling device will be described later below with reference to Figs. 2 and 3.

As shown in Fig. 1, the first line 6 may provide fluidic communication between the first means 2 and a first valve 4 arranged between the first means 2 and the second means 3. The first valve 4 may be provided on the fluid path between the first means 2 and the second means 3. The first valve 4 may be configured to direct fluid from the first line 6 to the second line 7 or the third line 8 of the sample preparation system 1. For example, in case that fluid is directed to the second line 7, the flow of fluid to the third line 8 may be blocked. Further, for example, in case that fluid is directed to the third line 8, the flow of fluid to the second line 7 may be blocked. The first valve 4 may be a 3-way diaphragm valve or a 3-way ball valve, for example.

As can be seen from Fig. 1, the second line 7 may provide fluidic communication between the first valve 4 and a second valve 5 downstream of the second means 3, through the second means 3. Further, the third line 8 may provide fluidic communication directly between the first valve and the second valve 5. Accordingly, the third line 8 may be configured to bypass the second means 3.

The second means 3 may be configured to be connected to the second consumable 3a (e.g., purification filter or purification chromatography column) and to support the second consumable 3a. For example, the second means 3 may be a second filter holder or may correspond to parts of the second line 7 providing fluidic communication between the first valve 4 and the second valve 5.

In case the second means 3 is the second filter holder, the second line 7 may be interrupted between the first valve 4 and the second valve 5, and the second filter holder as the second means 3 may be located at the interruption and connected to a first end part of the interrupted second line 7 on the upstream side and to a second end part of the interrupted second line 7 on the downstream side. In some exemplary embodiments, the second filter holder as the second means 3 may comprise a first clamp and a second clamp that are configured to clamp the second consumable 3a in a manner analogous to that of the first clamp 10a and the second clamp 10b of the first means 2 as described above.

In case that the second means 3 corresponds to parts of the second line 7, the second line 7 may be interrupted between the first valve 4 and the second valve 5, and the second consumable 3a may be located at the interruption and supported by a first end part of the interrupted second line 7 on the upstream side and by a second end part of the interrupted second line 7 on the downstream side.

The second valve 5 arranged downstream of the second means 3 may be configured to direct fluid to the fourth line 19 downstream of the second valve 5. For example, the second valve 5 may be a 3-way valve which has three ports with two inlets connected to the second line 7 and the third line 8, and which can be in one of two states, directing flow from one of its two inlets, e.g., the second line 7 and the third line 8, to the fourth line 19 downstream of the second valve 5. In some exemplary embodiments, the second valve may be a 3-way diaphragm valve or a 3-way ball valve.

The fourth line 19 may provide fluidic communication between the second valve 5 and an output valve 20 arranged downstream of the second valve 5. The output valve 20 may be configured to direct fluid to the output line 22 providing fluidic communication between the output valve 20 and an output cup 23 or to a waste vessel line 44 providing fluidic communication between the output valve 20 and the waste vessel (not shown). For example, in case fluid is directed to the output line 22, the flow of fluid to the waste vessel line 44 may be blocked. Further, for example, in case fluid is directed to the waste vessel line 44, the flow of fluid to the output line 22 may be blocked. The output valve 20 may be a 3-way valve which has three ports, and can be in one of two states, directing flow to one of its two outlets, e.g., the output line 22 and the waste vessel line 44. In some exemplary embodiments, the output valve 20 may be a 3-way diaphragm valve or a 3-way ball valve.

The output cup 23 may be configured to hold fluid that has been output by the sample preparation system 1. In some exemplary embodiments, the output cup may have a volume of from 10 ml to 150 ml, preferably from 20 ml to 80 ml.

Further, the sample preparation system 1 shown in Fig. 1 may comprise a waste pump 25 configured to pump fluid within the fluid path to direct the fluid towards the waste vessel (not shown). For example, the fluid led to the waste vessel line 44 from the output valve 20 and/or the fluid flowing from the input sample valve 14 (when the input sample valve 14 is set to prevent the sample fluid from flowing towards the first means) may be directed to the waste vessel by operating the waste pump 25.

On the sample preparation system 1 shown in Fig. 1, several sensors may be provided.

For example, a first liquid sensor 15 may be provided on the input line 12 at a position downstream of the input sample valve 14 and upstream of the first means 2. The first liquid sensor 15 may be configured to detect whether liquid is present or not at the position where the first liquid sensor 15 is arranged. According to this configuration, the first liquid sensor 15 can for example detect whether the input cup 13 has emptied.

Further, for example, a second liquid sensor 16 may be provided on the fluid path at a position downstream of the first means 2 and upstream of the second means 3. The second liquid sensor 16 may be configured to detect whether liquid is present or not at the position where the second liquid sensor is arranged. Preferably, the second liquid sensor 16 may be arranged on the first line 6, upstream of the first valve 4. According to this configuration, based on the detection result of the second liquid sensor 16, the first valve 4 and the second valve 5 can be switched to direct fluid through the second line 7 via the second means 3 or through the third line 8 for bypassing the second means 3, for example.

Further, for example, a first pressure sensor 17 may be provided on the input line 12 at a position downstream of the first liquid sensor 15 and upstream of the first means 2, in other words, at an upstream point with respect to the first means 2. The first pressure sensor 17 may be configured to detect the pressure of the sample preparation system 1 at the position where the first pressure sensor 17 is arranged. Preferably, the first pressure sensor 17 may be arranged downstream of the pump 9 and upstream of the first means 3. In some exemplary embodiments, the first pressure sensor 17 may be arranged downstream of the pump 9 and of the first liquid sensor 15 and upstream of the first means 9. Thereby, the flow of fluid to the first means can be easily controlled.

Further, for example, a second pressure sensor 18 may be provided on the fluid path at a position downstream of the first means 2 and upstream of the second means 3, in other words, at a downstream point with respect to the first means 2. The second pressure sensor 18 may be configured to detect the pressure of the sample preparation system 1 at the position where the second pressure sensor 18 is arranged. Preferably, the second pressure sensor may be arranged on the first line 6, upstream of the first valve 4. According to this configuration, based on the measurement result of the second pressure sensor 18, the first valve 4 and the second valve 5 can be switched to direct fluid through the second line 7 via the second means 3 or through the third line 8 for bypassing the second means 8.

Further, for example, a target substance detecting sensor 21 may be provided on the fourth line 19 at a position downstream of the second valve 5 and upstream of the output valve 20. The target substance detecting sensor 21 may be configured to detect the target substance within the fluid path at the position where the target substance detecting sensor 21 is arranged. According to this configuration, a target substance emerging from the first means 2 and/or the second means 3 can be easily detected. Depending on the detection result of the target substance detecting sensor 21, the fluid can be directed to the output cup 23 or the waste vessel. Specifically, in case the target substance is detected by the target substance detecting sensor 21, the output valve 20 can be switched to direct the target substance or fluid containing the target substance to the output cup 23. In case the target substance is not detected by the target substance detecting sensor 21, the output valve 20 can be switched to direct the fluid to the waste vessel. In some exemplary embodiments, the target substance detecting sensor 21 may be a UV sensor.

**Fig. 2** shows side views of a part of the exemplary sample preparation system. Specifically, Figs. 2(a) and 2(b) show the input stack 11 holding a plurality of filters as the first consumables 2a (e.g., clarification filters), a filter handling device 27 and a waste bin 26. The filter handling device 27 may be connected to the first means 2 (shown in Fig. 1) and to the input stack 11. The filter handling device 27 may be configured to receive a first consumable 2a provided on the fluid path (e.g., from the first means 2) and to provide the first consumable 2a on the fluid path (e.g., to be supported by the first means 2). The filter handling device 27 can operate in an automated manner, e.g., without intervention by a human being.

Specifically, the filter handling device 27 may be connected to the input stack 11 and may be configured to receive a first consumable 2a from the first means 2 and to provide the received first consumable 2a to the waste bin 26. Further, the filter handling device 27 may be configured to receive a first consumable 2a from the input stack and to provide the received first consumable 2a to the first means 2 automatically.

In some exemplary embodiments, the filter handling device 27 may be an index wheel.

**Fig. 3** shows an exemplary filter handling device in a form of an index wheel. The filter handling device 27 in Fig. 3 may have an opening 28, at a first position of the index wheel, in its in-plane direction which conforms to the shape of a filter as the first consumable 2a. The filter handling device 27 shown in Fig. 3 further has a hole 29 in the in-plane direction of the index wheel that extends from a first surface of the index wheel to a second surface of the index wheel at a second position of the index wheel. The first position of the index wheel at which the opening 28 is located and the second position of the index wheel at which the hole 29 is located may be diametrically opposed to each other. Accordingly, the filter handling device 27 in the form of the index wheel may have substantially a lune shape with a concave-convex region bounded by two circular arcs.

The filter handling device 27 in the form of the index wheel can be rotated such that a first opening of the hole 29 on the first surface of the index wheel connects to the input line 12 (see Fig. 1) and a second opening of the hole 29 on the second surface of the index wheel connects to the first line 6 (see Fig. 1). Accordingly, the hole 29 on the filter handling device 27 may provide fluidic communication between the input line 12 and the first line 6 in cases where fluid needs to flow through the first means 2 without passing through the filter, for example, when no clarification but only purification is performed by the sample preparation system 1, when the input line 12 upstream the first means 2 is rinsed through, when the sample preparation system 1 is being cleaned, etc.

The filter handling device 27 in the form of the index wheel may be rotated, whereby a first consumable 2a may be received from the input stack 11 and provided to the first means 2. Moreover, filter handling device 27 in the form of the index wheel may be rotated to receive a first consumable 2a from the first means and to provide it to the waste bin 26.

With the filter handling device 27 and the input stack 11 as described above with reference to Figs. 2 and 3 can enable the filter as the first consumable 2a to be automatically loaded to and ejected from the first means 2 (e.g., first filter holder) of the sample preparation system 1. In other words, by using the filter handling device 27, a new (e.g., unused) first consumable 2a can be easily provided to the first means 2 while a used first consumable 2a can be readily removed automatically.

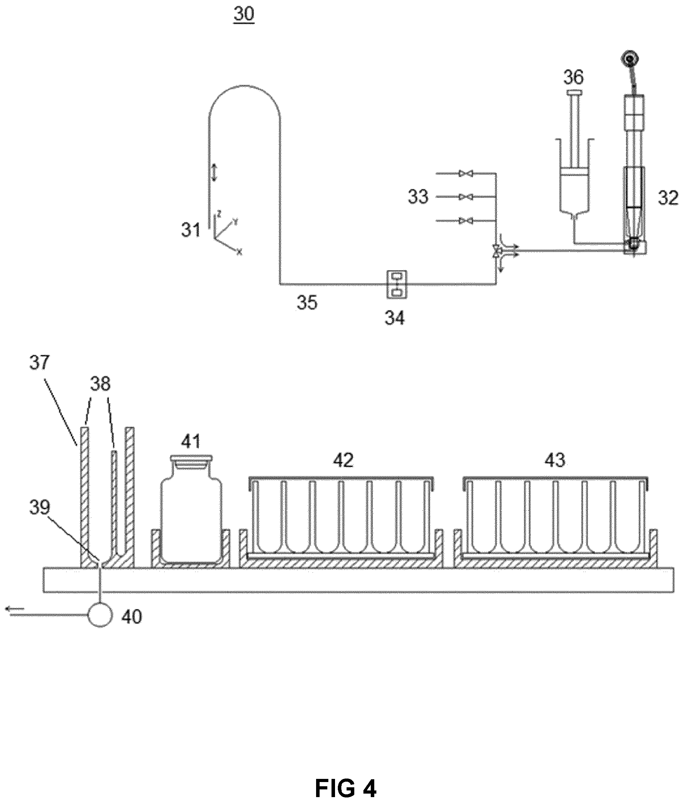

**Fig. 4** shows an exemplary pipetting robot (top) and an exemplary pipette wash station (bottom) that may be used in the sample preparation system 1. For example, the sample preparation system 1 may comprise a pipetting robot 30 configured to transfer fluid such as sample fluid from at least one input vessel (not shown) to the input cup 13 (see Fig. 1). The pipetting robot 30 may comprise a pipette tip 31 connected to a flow-through pH electrode 32 and to fluid input valves 33. The fluid input valves 33 may be configured to provide for example water, sodium hydroxide and/or a pH neutralisation buffer to the pipette tip.

The pipetting robot 30 may further comprise a pipette liquid sensor 34 arranged on a pipetting robot line 35 providing fluidic communication between the pipette tip 31, the flow-through pH electrode 32 and the fluid input valves 33. The pipette liquid sensor 34 may be configured to detect whether liquid is present or not at its location. Moreover, the pipetting robot 30 may comprise a syringe 36 connected to the flow-through pH electrode 32. A pipette wash station 37 may be configured to receive the pipette tip 31 of the pipetting robot 30. The pipette wash station 37 may have walls 38 that surround the pipette tip 31 of the pipetting robot 30 while the pipetting robot 30 is disposed therein.

Further, the pipette wash station 37 may have an outlet 39 at its bottom through which fluid can emerge. Specifically, the liquid can be provided by at least one of the fluid input valves 33 of the pipetting robot 30 and can be used to wash the pipette tip 31 while the pipetting robot 30 is disposed in the pipette wash station 37. The outlet 39 may be connected to a waste vessel (not shown) to which liquid may be pumped by the use of a tip wash waste pump 40. Further shown in Fig. 4 are a storage vessel 41 for storing for example process liquids, input vessels 42 and output vessels 43 which may be arranged next to the pipette wash station 37.

In some exemplary embodiments, one input vessel may have a volume of from 2 ml to 20 ml. The input vessel is not particularly limited and may be selected from a culture vessel, a spin tube and a multi-well plate, for example.

With the use of the pipetting robot 30, the type of input vessel is not particularly limited. Therefore, the pipetting robot 30 can provide flexibility in the selection of the input vessel such that the choice thereof may only depend on the fluid to be handled such as the sample fluid to be prepared.

Additionally or alternatively to the pipetting robot 30 configured to transfer fluid from at least one input vessel (not shown) to the input cup 13 as described above, the sample preparation system 1 may comprise a pipetting robot 30 configured to transfer the fluid from the output cup 23 (see Fig. 1) to at least one output vessel (not shown). The pipetting robot 30 configured to transfer the fluid from the output cup 23 to the at least one output vessel may be the same as the pipetting robot 30 configured to transfer fluid from at least one input vessel (not shown) to the input cup 13 as described above.

In some exemplary embodiments, one output vessel may have a volume of from 2 ml to 80 ml. The output vessel is not particularly limited and may be selected, for example, from a 15 ml centrifuge tube, a 50 ml centrifuge tube and a multi-well plate. With the use of the pipetting robot 30, the type of output vessel is not particularly limited. Therefore, the pipetting robot 30 can provide flexibility in the selection of the output vessel.

**Control Device**

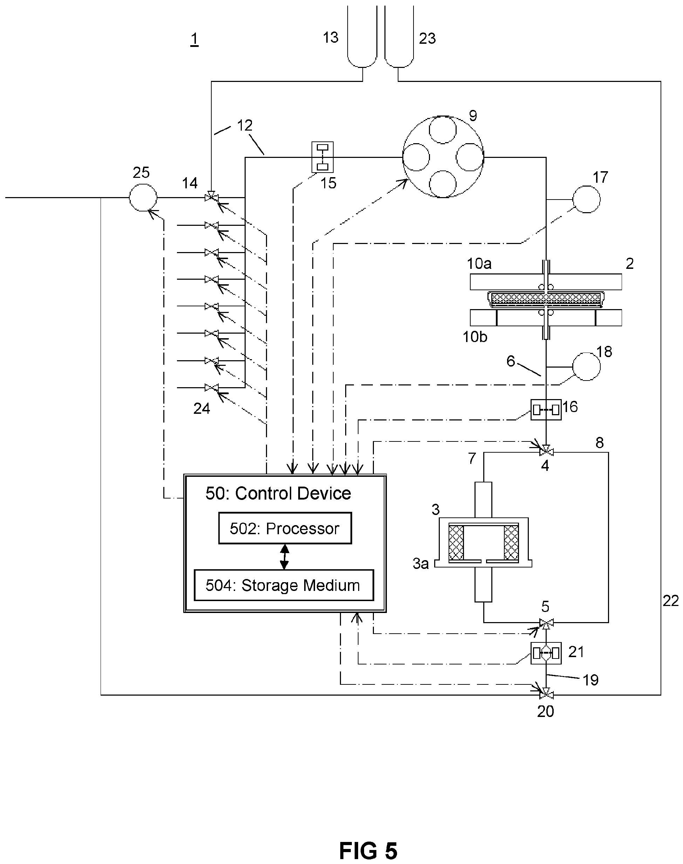

**Fig. 5** shows a diagram illustrating flow of control signals and sensor signals between an exemplary control device and the exemplary sample preparation system. In the specific example of Fig. 5, the sample preparation system 1 shown in Fig. 1 is in communication with a control device 50. It is noted that, in Fig. 5, the input stack 11 (see Fig. 1) of the sample preparation system 1 is not shown for the sake of facilitating understanding of the flow of the signals but the sample preparation system 1 shown in Fig. 5 also comprises the input stack 11 as in Fig. 1.

As shown in Fig. 5, the control device 50 may comprise a processor 502 and a storage medium 504 in communication with the processor 502. The processor 502 may be configured to perform a control process for controlling a sample preparations system such as the exemplary sample preparation system 1. For example, the processor 502 may be configured to communicate with various sensors provided in the sample preparation system 1 to obtain system information from the sensors. Further, for example, the processor 502 may be configured to communicate with components comprised in the sample preparation system 1 to transmit control signals to the components. The processor 502 may communicate with the sensors and the components via one or more wired and/or wireless networks. The processor 502 may further obtain, from the storage medium 504, information necessary for performing the control process (e.g.,

one or more pieces of system information other than those that may be obtained from the sensors, one or more values of operating parameters for the control process, etc.).

As shown in Fig. 5, the control device 50 may receive system information from the first liquid sensor 15, the pump 9 (e.g., a sensor (not shown) provided on the pump 9 to measure the rotation speed of the pump 9), the first pressure sensor 17, the second pressure sensor 18, the second liquid sensor 16 and/or the target substance detecting sensor 21. The system information from the respective sensors may include information indicative of values measured by the respective sensors.

The processor 502 may process the system information received from the respective sensors to control the sample preparation system 1. For example, the processor 502 may determine how at least one component of the sample preparation system 1 should operate based on processing the system information, generate at least one control signal to instruct the at least one component to operate as determined and then output the generated control signal(s) to the at least one component. In some exemplary embodiments, the processor 502 may be configured to function as a PID controller (proportional-integral-derivative controller).

As shown in Fig. 5, the control device 50 may output control signals to the input sample valve 14, the process fluid input valves 24, the pump 9, the first valve 4, the second valve 5, the output valve 20 and/or the waste pump 25. Additionally, although not show in Fig. 5, the control device 50 may output control signals to the filter handling device 27 (see Figs. 2 and 3) and/or to the pipetting robot 30 (see Fig. 4).

The storage medium 504 may be configured to store information that is necessary for the processor 502 to perform the control process.

Details of the control process performed by the processor 502 of the control device 50 will be described later below.

It is noted that, although Fig. 5 shows the control device 50 having a single processor 502, in some exemplary embodiments, the control device 50 may have more than one processor 502. Further, although Fig. 5 shows the control device 50 to be a separate device as the sample preparation system 1, in some exemplary embodiments, the control device 50 may be integrated into the sample preparation system 1 as a part of the sample preparation system 1.

### Sample Preparation Process

As also mentioned above, the sample preparation system may perform one or more unit operations such as clarification and purification on a sample.

In the specific example of Fig. 1, the sample preparation system 1 may perform clarification and/or purification.

a) Clarification Process

The clarification process may be understood as a process of clarifying the sample fluid by passing it through a clarification filter (e.g., the first consumable 2a) supported by the first filter holder (e.g., the first means 2) to provide clarified sample fluid.

The following provides a typical example of a clarification process performed by the sample preparation system 1.

At the beginning of the exemplary clarification process (a), a clarification filter may be provided to the first means 2, wherein the clarification filter is new, in other word, unused (hereinafter referred to as "step (c1)"). In said step (c1), preferably, the clarification filter is provided by the consumable handling device from the input stack.

In some cases, a clarification filter may already be connected to the first means 2 at the beginning of the clarification process (a). In any case, it might be necessary to exchange the clarification filter during the clarification process (a) for avoiding blockage of the clarification filter and product loss. In some exemplary embodiments, the clarification filter may be automatically ejected from the first means 2 and automatically replaced by a new clarification filter.

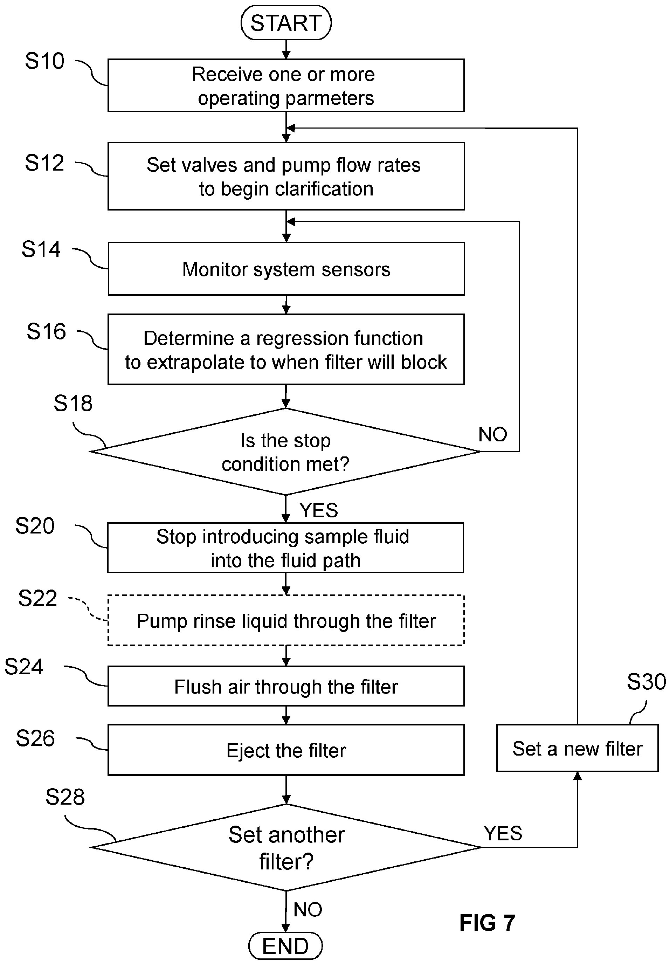

Preferably, based on the measured backpressure of the clarification filter measured by the first pressure sensor 17, or the pressure difference between the first pressure sensor 17 and the second pressure sensor 18, and the pumping speed, a decision can be made to automatically eject the clarification filter from the first means and automatically replace it by a new clarification filter. The details on how to make such a decision will be described later below with reference to an exemplary process shown in Fig. 7.

Then, the clarification filter is preferably clamped such that the upper face and the lower face of the clarification filter are supported against the internal pressure during filtration (i.e. "step (c2)").

Further, an air pressure test can be performed on the sample preparation system 1 and the clarification filter before the sample to be clarified is pumped to the clarification filter (i.e. "step (c3)"). In particular, in said step (c3), the first valve and the second valve are set to close the flow path and the pump 9 pumps air into the sample preparation system to reach a preset pressure. In some circumstances, the preset pressure is from 0.1 bar to 4 bar, preferably from 0.5 bar to 1 bar. Then, the pressure is monitored for a few seconds. At the end of the air pressure test, the pressure is released by setting the first valve, the second valve and the output valve such that the pressure is released to the waste vessel via the third line.

After the optional air pressure test, the sample to be clarified can be provided to the input cup 13 of the sample preparation system 1 (i.e. "step (c4)a"). As an alternative, the sample to be clarified can also be provided to the input cup 13 of the sample preparation system 1 before any of steps (c1) to (c3) (i.e. "step (c4)b"). Preferably, the pipetting robot 30 can provide the sample to be clarified to the input cup 13 by transferring the sample to be clarified from at least one input vessel to the input cup 13 of the sample preparation system 1.

Then, the sample to be clarified can be pumped from the input cup 13 to the clarification filter (i.e. "step (c5)"). In some circumstances, at said step (c5), the sample to be clarified passes on its way from the input cup 13 to the clarification filter at least the input sample valve 14, the first liquid sensor 15 and the first pressure sensor 17.

Further, the sample is clarified by passing it through the clarification filter connected to the first means 2 (hereinafter referred to as "step (c6)").

The clarified sample can then be directed to the output cup 23 (hereinafter referred to as "step (c7)"). In some circumstances (e.g., when the clarified sample does not need to be subject to purification), at said step (c7), the clarified sample passes from the downstream side of the clarification filter to the output cup 23 at least the second pressure sensor 18, the second liquid sensor 16, the third line 8, the target substance detecting sensor 19 and the output valve 20. In other circumstances (e.g., when the clarified sample needs to be subject to purification), at said step (c7), the clarified sample passes at least the second pressure sensor 18, the second liquid sensor 16, the second line 3, the second consumable 3a, the target substance detecting sensor 19 and the output valve 20.

In case that the input cup 13 has emptied, the first liquid sensor 15 can detect that the sample to be clarified has run out (i.e. "step (c8)"). Specifically, the first liquid sensor can detect whether the sample to be clarified previously provided to the input cup 13 has already passed the location where the first liquid sensor 15 is arranged.

After step (c8), a rinsing step can be automatically carried out (i.e. "step (c9)"). In particular, a rinsing liquid such as PBS can be provided to the sample preparation system 1 by one of the process fluid input valves 24 arranged upstream of the first means 2. Thereby, sample to be clarified still present upstream of the first means 2 can be directed to the first means 2 and sample within the clarification filter can be rinsed through the clarification filter. Preferably, the rinsing liquid which passed through the clarification filter containing clarified sample is directed to the output cup 23.

After step (c8) and/or step (c9), a step of pumping air is preferably carried out (i.e. "step (c10)"). Specifically, air can be provided to the sample preparation system 1 by one of the process fluid input valves 24 arranged upstream of the first means 2. Air pushes the sample to be clarified or rinse liquid still present on the upper flow field of the clarification filter and already partly clarified sample or rinse liquid still contained within the clarification filter through the clarification filter. Thereby yielded clarified sample can be directed to the output cup 23.

By applying step (c10), product recovery can be increased. The air pressure used may be for example in a range of from 0.5 bar to 2 bar. Thereby, the air pressure may be below the bubble point of the clarification filter such that the creation of foam can be avoided. Typically, the bubble point of a clarification filter is greater than 3 bar. After a waiting time of for example from 0 s to 5 s, the air pressure is released by reversing the pump 9. The measurement of the bubble point is well known to the skilled person. For example, the bubble point can be measured according to ISO 2942 or ASTM F316-03.

Then, the clarification filter can be ejected from the first means 2 (i.e. "step (c11)"). In case that the first means 2 is the first filter holder, and the clarification filter is clamped by the first clamp 10a and the second clamp 10b, the clarification filter is unclamped before the clarification filter is ejected. The ejected clarification filter can be received by the filter handling device 27 and provided to the waste bin 26 (see e.g., Fig. 2).

Further, in some circumstances, the connecting means (e.g., the hole 29 shown in Fig. 3) comprised by the filter handling device 27 may connect the input line 12 and the first line 6 for providing fluidic communication between the input line 12 and the first line 6 such that the liquid path is closed (i.e. "step (c12)"). This can for example be achieved by using the index wheel as the filter handling device and rotating the index wheel to the second position of the index wheel where a through fluidic passage is located which can then connect to the input line 12 and the first line 6.

Afterwards, clarified sample and/or rinsing liquid containing the target substance that is present downstream of the first means can be directed to the output cup 23 by pumping air (i.e. "step (c13)").

In some circumstances, the output sample present in the output cup can be transferred to at least one output vessel (i.e. "step (c14)"). This step can, for example, be carried out by the pipetting robot 30.

Optionally, the sample preparation system 1 can then be cleaned by pumping cleaning liquids such as a buffer, sodium hydroxide and/or water through the sample preparation system 1 from the process fluid input valves 24 arranged upstream of the first means 2 to the output cup 23, then in reverse from the output cup 23 to the input cup 13 (i.e. "step (c15)"). The resulting liquid can then be directed to the waste vessel by the use of the waste pump 25.

b) Purification Process

The purification process may be understood as a process of purifying the sample fluid by passing it through a purification filter or a purification chromatography column (e.g., the second consumable 3a) connected to the second means 3 to provide purified sample fluid.

In some exemplary embodiments, the purification process may be performed after the clarification process as described above. In some circumstances, however, the purification process may be performed without performing the clarification process, in which case the clarification filter is not set to the filter holder (e.g., the first means 2) and the fluid may be allowed to flow from the input line 12 to the first line 6 via the hole 29 of the filter handling device 27 (see Figs. 1 and 3) without passing through the clarification filter.

**Control Process**

The clarification process as described above may be driven at a pumped flow rate with a maximum differential pressure (which may also be referred to as "dP") across the clarification filter (e.g., the first consumable 2a) to maintain the integrity of the cells. When the maximum differential pressure is reached, then the control device 50 may control the pump 9 to slow down in order to keep the differential pressure constant. When a clarification process is controlled to a differential pressure by slowing the flow rate (e.g., by decreasing the rotation speed of the pump 9), the clarification process can become very slow.

Once the maximum differential pressure is reached, then the clarification process may have diminishing returns and a process stop point must be decided - e.g. minimum flow rate, maximum process time. It may be desirable to minimise DNA and host cell protein (HCPs) in the output sample. This can be achieved by keeping the differential pressure as low as possible.

For maximum recovery, a rinse of the clarification may be necessary. The ideal balance for maximum efficiency may be to time the switch from input culture to rinse buffer so that, when the rinse has finished, the maximum differential pressure is just met but the control device 50 has not needed to decrease the pump rate (e.g., the rotation speed of the pump 9). In this scenario, the clarification process may be operating at a maximum speed for the longest possible time. This may be technically challenging to achieve as the fouling of the clarification filter may be non-linear and dependent on the "filterability" of the input culture.

A control process performed by the control device 50 according to the present disclosure can achieve or (at least come close to achieving) such clarification optima. The control process performed by the control device 50 according to the present disclosure can also avoid the worst-case scenario of filter blockage, which may reduce time, product recovery and may require further intervention to move past.

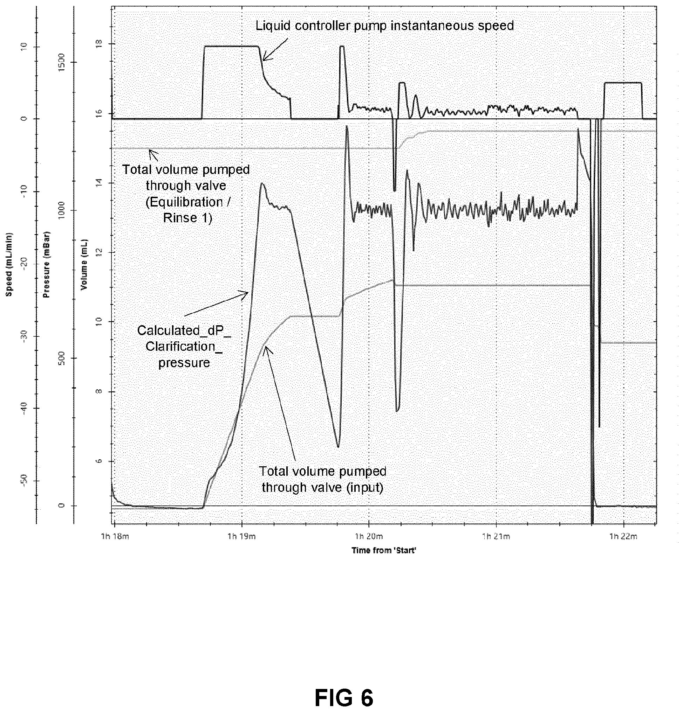

**Fig. 6** shows a graph of exemplary recorded online data obtained by running the exemplary sample preparation system 1 without the control process according to the present disclosure. Fig. 6 shows an example of the impact of waiting until the 1000 mbar maximum differential pressure limit. In other words, in the example of Fig. 6, the control device 50 controlled the pump 9 of the sample preparation system 1 to keep the sample fluid flow into the flow path towards the clarification filter while the differential pressure was below the 1000 mbar limit and to reduce the rotation speed (e.g., pump flow rate) of the pump 9 when the differential pressure reached the 1000 mbar limit.

As can be seen from Fig. 6, the pump flow rate (indicated as "liquid controller pump instantaneous speed" in Fig. 6) decreases, slowing process timing and stopping rinse buffer from easily passing through the filter (see e.g., "total volume pumped through valve (Equilibration / Rinse 1)" in Fig. 6). This may reduce product recovery because it was not possible to fully rinse the filter and, thus, the product was retained in the filter. Further, this may increase cell lysis (as can be indicated by LDH (lactate dehydrogenase)) and HCP contaminants in the output.

**Fig. 7** shows a flowchart of an exemplary process for controlling a sample preparation system. More specifically, the exemplary process shown in Fig. 7 may be performed for controlling the sample preparations system 1 when the sample preparation system 1 performs the clarification process as described above.

The exemplary process shown in Fig. 7 may be performed by the processor 502 of the control device 50. The exemplary process shown in Fig. 7 may be started when receiving an instruction from a user via an input device (not shown) to start the exemplary process. The instruction from a user may include, for example, an instruction for the sample preparation system to start clarifying sample fluid.

It is noted that, as will be apparent from the description of the exemplary process shown in Fig. 7, the clarification process performed at the sample preparation system 1 when the processor 502 controls the sample preparation system 1 according to the exemplary process shown in Fig. 7 is not exactly identical to the typical example of the clarification process described above. Specifically, for example, the rinsing step (c9) and/or the air pumping step (c10) may be carried out under a condition different from detecting that the sample to be clarified has run out (step (c8)).

When the exemplary process shown in Fig. 7 starts, at step S10, the processor 502 may receive one or more operating parameters for the exemplary process. The one or more operating parameters may include at least a specified maximum differential pressure. The specified maximum differential pressure may be input by a user using an input device (not shown) connected to or in communication with the processor 502.

In some exemplary embodiments, the one or more operating parameters may further include a specified time period Δt (represented by a unit of time (e.g., seconds, minutes, etc.) or by a change of the amount (e.g., volume) of fluid introduced into the fluid path) used in determining a regression function as will be described below in detail with regards to step S16. In some exemplary embodiments, the one or more operating parameters may further include a specified stop condition (e.g., first specified condition) for determining whether or not to stop introducing the sample fluid into the fluid path of the sample preparation system 1, as will be described later below with regards to step S18.

The specified time period Δt and/or the specified stop condition may also be input by the user using the input device.

Optionally, the one or more operating parameters may further include one or more of: cell density of the sample fluid, turbidity of the sample fluid, particle size distribution of the sample fluid, optical density of the sample fluid, filter resistance index, filter surface area. Values of these further operating parameters may be input by the user using the input device. After step S10, the exemplary process may proceed to step S12.

At step S12, the processor 502 may set positions of the valves and pump flow rates to begin the clarification process. For example, the processor 502 may generate control signals to set the process fluid input valves 24 to prevent various kinds of process fluid from flowing into the fluid path and output the generated control signals to the respective process fluid input valves 24. Further, the processor 502 may generate a control signal to set the input sample valve 14 to let the sample fluid flow from the input cup 13 towards the pump 9 and the first means 2 and output the generated control signal to the input sample valve 14. Further, the processor 502 may generate a control signal to instruct the pump 9 to start pumping fluid at a specified rotation speed (e.g., a default rotation speed depending on the type of the sample fluid, a rotation speed specified by a user, etc.) and output the generated control signal to the pump 9.

Further, for example, the processor 502 may generate control signals to set the first valve 4, the second valve 5 and/or the output valve 20 to positions that are appropriate for a desired flow of the clarified sample fluid and output the generated control signals to the first valve 4, the second valve 5 and/or the output valve 20, respectively. For instance, in case the clarified sample fluid is to be subject to a purification process, the first valve 4 is set to allow the clarified sample fluid to flow towards the second means 3.

Further, for example, in case the clarified sample fluid is to be collected in the output cup 23 without the purification process, the first valve 4, the second valve 5 and the output valve 20 are set to allow the clarified sample fluid to flow through the third line 8 and the output line 22 towards the output cup 23. To summarize, the processor 502 may control the sample preparation system 1 to perform the steps (c5), (c6) and (c7) of the exemplary clarification process as described above. After step S12, the exemplary process may proceed to step S14.

At step S14, the processor 502 may monitor the sensors provided on the sample preparation system 1 (e.g., while the sample preparation system 1 performs the steps (c5), (c6) and (c7) of the exemplary clarification process described above). For example, the processor 502 may receive system information at least indicative of an amount of the sample fluid that has been introduced into the fluid path (e.g., including at least the input line 12 and the first line 6), an upstream pressure at the first pressure sensor 17 and a downstream pressure at the second pressure sensor 18.

The amount of the sample fluid that has been introduced into the fluid path may be obtained from the sensor (not shown) on the pump 9 to measure the rotation speed of the pump 9, for example. For example, the amount of the sample fluid may be calculated using the rotation speed of the pump 9 and time elapsed since the start of the sample preparation process performed by the sample preparation system 1. More specifically, for example, when the rotation speed of the pump 9 is represented by an amount of fluid pumped by the pump 9 per unit time (e.g., ml / min), the amount of the sample fluid that has been introduced into the fluid path may be a product of an average rotation speed of the pump 9 and the time elapsed since the start of the sample preparation process. Further, in some aspects, the amount of the sample fluid that has been introduced into the fluid path may be proportional to an amount of rotations of the pump 9 (e.g., the number of rotations) since the start of the sample preparation process. Thus, if the amount of fluid that can be pumped by one rotation of the pump 9 is known, the amount of the sample fluid may be obtained by calculating the amount of rotations of the pump 9 since the start of the sample preparation process from the rotation speed of the pump 9 (represented by e.g., rpm) and the time elapsed.

In some exemplary embodiments, a rotation speed sensor is not necessarily provided on the pump 9. In such exemplary embodiments, a calibrated value for rotation of the pump 9 (e.g., driven by a DC motor or a stepper motor) may be obtained from the storage medium 504 and the amount of the sample fluid may be calculated using the obtained calibrated value for the rotation of the pump 9.

Further, in some exemplary embodiments, an atmospheric pressure stored in the storage medium 504 may be obtained as the downstream pressure instead of obtaining the downstream pressure from the second pressure sensor 18.

During the monitoring at step S14, the processor 502 may repeatedly receive the system information (in particular, one or more values that may change over time, e.g., the amount of fluid that has been introduced into the fluid path, the upstream pressure, etc.) at a specified time interval (e.g., 500 ms, but may also be longer or shorter depending on processing power). In case the system information includes one or more values that do not change over time (e.g., the atmospheric pressure as the downstream pressure, etc.) such value(s) do not need to be repeatedly received by the processor 502 but receiving at least once may suffice. After step S14, the exemplary process may proceed to step S16.

At step S16, the processor 502 may determine a regression function to extrapolate to when the clarification filter will block. For example, the regression function may be determined by assuming that differential pressures $dP\_t_i$-$\Delta t$, ... , $dP\_t_i$ across the clarification filter, based on upstream pressures and downstream pressures, obtained for different points in time $t_i$-$\Delta t$, ..., $t_i$ within the specified time period $\Delta t$ are values of a dependent variable y of the regression function and amounts $Vin\_t_i$-$\Delta t$, ..., $Vin\_t_i$ of the sample fluid introduced into the fluid path obtained for different points in time $t_i$-$\Delta t$, ..., $t_i$ within the specified time period $\Delta t$ are values of an independent variable x of the regression function. Accordingly, the regression function may be determined using the system information obtained (at step S14) with respect to the specified time period $\Delta t$ preceding the current point in time $t_{current}$. As also stated above, the current point in time $t_{current}$ may be represented by an amount of fluid that has been introduced into the fluid path so far since the start of the sample preparation process carried out by the sample preparation system 1. Alternatively, the current point in time $t_{current}$ may be represented in a unit of time (e.g., t seconds or minutes from the start of the sample preparation process).

The specified time period $\Delta t$ used in step S16 may vary depending on the sample preparation process carried out by the sample preparation system 1. In some circumstances, the specified time period $\Delta t$ may be as short as the monitoring interval (step S14), e.g., 500 ms. In other circumstances, the specified time period $\Delta t$ may be as long as the entire duration of the sample preparation process, in other words, from the start of the sample preparation up to the current point in time. In some exemplary embodiments, the specified time period $\Delta t$ may be a period in which 1.0 ml of the fluid is introduced into the fluid path or 10 seconds.

In some exemplary embodiments, the specified time period $\Delta t$ may be immediately before the current point in time $t_{current}$. Here, "immediately before" may indicate the time period up to a time point of a single time interval (for receiving the system information) before the current point in time. For example, in case the time interval for receiving the system information during the monitoring step S14 is 500 ms and the specified time period is 10 seconds, the specified time period $\Delta t$ immediately before the current point in time $t_{current}$ may be a time period starting from $t_{current}$ - 10.5 s to $t_{current}$ - 0.5 s.

In some other exemplary embodiments, the specified time period $\Delta t$ is not necessarily immediately before the current point in time $t_{current}$. For example, the specified time period $\Delta t$ may indicate the time period up to a time point that is before the current point in time $t_{current}$ and that is preferably within a certain fraction (e.g., 1/10) of an expected total time (or the total amount of sample fluid) for the sample preparation process.

In some exemplary embodiments, the regression function may be a linear regression function as follows:

$$y = ax + c \quad (1),$$

where x and y may be the independent variable and the dependent variable as stated above, respectively, and a and c may be coefficients of the regression function. From the monitoring of the system information at step S14, pairs of x-y values during the specified time period may be obtained.

More specifically, pairs of the amount of the sample fluid that has been introduced into the fluid path (e.g., value of x) and the differential pressure across the clarification filter (e.g., value of y, which may be determined by calculating a difference between the downstream pressure from the second pressure sensor 18 and the upstream pressure from the first pressure sensor 17) during the specified time period may be obtained. The coefficients a and b of the regression function (1) may be determined using the pairs of x-y values obtained during the specified time period.

In some further exemplary embodiments, the regression function may have a form different from the linear regression function as stated above. For example, one of the following regression functions may be used as the regression function at step S16:

$$y = ax^b + c \quad (2),$$

$$y = ae^{bx} + c \quad (3),$$

where x and y may be the independent variable and the dependent variable as stated above, respectively, and a, b and c may be coefficients of the regression function. Also in case the function (2) or function (3) is used as the regression function at step S16, the coefficients a, b and c may be determined using the pairs of *x-y* values obtained during the specified time period as described above.

In the exemplary embodiments where one or more further operating parameters are obtained (e.g., one or more of: cell density, turbidity, particle size distribution, optical density, filter resistance index, filter surface area), the further operating parameters may also be used in determining the regression function.

For example, the further operating parameter(s) may be used for determining the value(s) of the coefficient(s) included in the regression function, e.g., the coefficient(s) a, b and/or c in the regression functions (1), (2) and (3) stated above. Further, for example, the further operating parameter(s) may be used for determining or adjusting the specified time period the system information during which is used for determining the regression function.

More specifically, for example, the processor 502 may, for each one of the one or more further operating parameters, an equation to determine a blockage amount as a function of the one of the one or more parameters, the blockage amount indicating an amount of the sample fluid that can cause the at least one consumable to block flow of the sample fluid when introduced into the at least one consumable.

Further, for example, the processor 502 may determine, for each one of the one or more further operating parameters, a coefficient indicating a ratio between:

the amount of the sample fluid that has been introduced into the fluid path at the current point in time or a total amount of the sample fluid to be introduced into the fluid path, and
a predicted blockage amount obtained using the generated equation.

Subsequently, the processor 502 may determine the regression function using the coefficient determined for each one of the one or more further operating parameters.

For determining the regression function, for example, the processor 502 may determine a sensitivity factor using the coefficient determined for each one of the one or more further operating parameters and select, from among a plurality of types of regression functions, one type of regression function to be used as the regression function, based on the sensitivity factor.

In a specific example, the sensitivity factor may be calculated as follows:

$$Sensitivity\ Factor = \alpha_1 \times \alpha_2 \times \cdots \times \alpha_N \qquad (4),$$

where $N$ may be the number of further operating parameters used and $\alpha_i$ ($i$ = 1, 2, $\cdots$,$N$) may be a coefficient determined for a further operating parameter $i$ by calculating:

$$\alpha_i = \frac{V_{input}}{V_{predicted\_i}} \qquad (5),$$

where $V_{input}$ may be a volume of the sample fluid that has been introduced into the fluid path of the sample preparation system 1 at the current point in time and $V_{predicted\_i}$ may be the predicted blockage volume obtained using the equation generated for the further operating parameter i.

If the coefficient $\alpha_i$ is equal to 1, then the volume $V_{input}$ of the sample fluid may be equal to the predicted blockage volume $V_{predicted\_i}$. If the coefficient $\alpha_i$ is smaller than 1, then the volume $V_{input}$ of the sample fluid may be smaller than the predicted blockage volume $V_{predicted\_i}$. If the coefficient $\alpha_i$ is greater than 1, then the volume $V_{input}$ of the sample fluid may be greater than the predicted blockage volume $V_{predicted\_i}$.

The number N of the further operating parameters to be used may be specified by a user e.g., using the input device (not shown) in communication with the processor 502.

In some exemplary embodiments, when the sensitivity factor determined as stated above is greater than a specified sensitivity threshold, the processor 502 may select a more sensitive (in other word, reactive) regression function among the plurality of types of regression functions. When the sensitivity factor is equal to or smaller than the specified sensitivity threshold, on the other hand, the processor 502 may select a less sensitive (in other word, reactive) regression function among the plurality of types of regression functions.

For example, in case the plurality of types of regression functions comprise the regression functions (1), (2) and (3) as stated above, the linear regression function (1) may be the least sensitive among the three. Since which of the regression functions (2) and (3) is more sensitive may depend on the values of the coefficients a, b and c, in case a more sensitive regression function is to be selected (e.g., the sensitivity factor is greater than the specified sensitivity threshold), one or more of the coefficients a, b and c may be set to different values and a more sensitive regression function with particular value(s) of the coefficients a, b and/or c may be selected. The specified sensitivity threshold may be determined beforehand using test data obtained from experiments.

Further, the sensitivity factor may be used for determining and/or adjusting the specified time period the system information with respect to which is used for determining the regression function. For example, the specified time period may be set longer for a lower sensitivity factor than the specified time period set for a higher sensitivity factor.

After step S16, the exemplary process may proceed to step S18.

At step S18, the processor 502 may determine whether the specified stop condition is met. For example, the specified stop condition may be determined to be met when a value indicative of a predicted blockage amount Vpb corresponds to the amount Vin_tcurrent of the sample fluid that has been introduced into the fluid path at the current point in time $t_{current}$. The predicted blockage amount Vpb may be a value of the independent variable x of the regression function when a value of the dependent variable y is the specified maximum differential pressure.

The predicted blockage amount Vpb may be understood as a predicted amount of the sample fluid committed to the filter when the differential pressure across the filter reaches the specified maximum differential pressure. The predicted blockage amount may also be referred to as a predicted filter blockage amount or, in case the amount is represented by a volume, a predicted filter blockage volume. Further, the amount Vin_tcurrent of the sample fluid that has been introduced into the fluid path at the current point in time $t_{current}$ may also be referred to as a current sample amount or, in case the amount is represented by a volume, a current sample volume.

In some exemplary embodiments, the processor 502 may determine that the specified stop condition is met in case the difference between the predicted filter blockage amount and the current sample amount (e.g., (the predicted filter blockage amount) - (the current sample amount)) is equal to or smaller than a specified threshold (e.g., 2 ml). The processor 502 may determine that the specified stop condition is not met in case the difference between the predicted filter blockage amount and the current sample amount is greater than the specified threshold. The specified threshold may relate to a committed volume of the sample preparation system, which may be determined by the volume of the conduit(s) between the input valve 14 and the clarification filter (e.g., the filter 2a).

The specified threshold may have been received by the processor 502 at step S10. In the exemplary embodiments where the further operating parameter(s) are used as stated above, the specified threshold may be adjusted using the further operating parameters. Alternatively or additionally, the specified threshold may be adjusted using the system information obtained with respect to the specified time period Δt used for determining the regression function at step S16. For example, if the predicted filter blockage volume Vpb obtained from the regression function is decreasing as iterations of step S16 proceed, the specified threshold may be increased. Further, for example, if the predicted filter blockage volume Vpb obtained from the regression function is increasing as iterations of step S16 proceed, the specified threshold may be decreased. Here, it is noted that the predicted filter blockage volume Vpb obtained from the regression function may depend on the system information indicative of the upstream pressure and the downstream pressure.

In case the processor 502 determines that the specified stop condition is not met (NO at step S18), the exemplary process of Fig. 7 may return to step S14. In this case, the monitoring step S14, the determination of the regression function at step S16 and the determination as to whether the specified stop condition is met at step S18 will be repeated, while the processor 502 controls the sample preparation system 1 to continue introducing the sample fluid into the fluid path of the sample preparation system 1. It is noted that, the regression function determined at step S16 may be different from the ones determined in different iterations of steps S14, S16 and S18 because the system information received with respect to different periods of time may be used for determining the regression function. Specifically, since the specified time period Δt used at step S16 may shift forward as the time elapses, the system information used at step S16 may include different pieces of information in different iterations. Accordingly, the regression function may be updated in real-time.

In case the processor 502 determines that the specified stop condition is met (YES at step S18), the exemplary process may proceed to step S20.

At step S20, the processor 502 may control the sample preparation system 1 to stop introducing the sample fluid into the fluid path of the sample preparation system 1. For example, the processor 502 may generate a control signal to set the input sample valve 14 to a closed state in which the sample fluid is prevented from flowing within the input line 12 towards the filter and output the generated control signal to the input sample valve 14. Further, for example, the processor 502 may generate a control signal to instruct the pump 9 to stop moving the sample fluid within the input line 12 and output the generated control signal to the pump 9. After step S20, the exemplary process may proceed to step S22 or step S24.

At an optional step S22, the processor 502 may control the sample preparation system 1 to pump rinse liquid through the filter (e.g., the rinsing step (c9) of the exemplary clarification process as described above). For example, the processor 502 may generate a control signal to set one of the process fluid input valves 24, which corresponds to a source of the rinse liquid, to an open state to allow the rinse liquid to flow within the fluid path towards the filter and output the generated control signal to the one of the process fluid input valves 24.

Further, for example, the processor 502 may generate a control signal to instruct the pump 9 to move the fluid within the input line 12 (e.g., the rinse liquid and any remaining sample fluid) towards the filter and output the generated control signal to the pump 9. With step S22, the sample fluid remaining in the input line 12 and/or in the filter may pass through the filter with the rinse liquid. Further, the processor 502 may set the one of the process fluid input valves 24 to a closed state in which the rinse liquid is prevented from flowing into the input line 12 in the end of the rinsing step S22 (e.g., after a certain period of time). After step S22, the exemplary process may proceed to step S24.

It is noted that step S22 is an optional step and may be skipped in some exemplary embodiments.

At step S24, the processor 502 may control the sample preparation system 1 to flush air through the filter (e.g., the air pumping step (c10) of the exemplary clarification process as described above). For example, the processor 502 may generate a control signal to set one of the process fluid input valves 24, which corresponds to a source of the air, to an open state to allow the air to flow within the fluid path (e.g., the input line 12) towards the filter and output the generated control signal to the one of the process fluid input valves 24.

Further, for example, the processor 502 may generate a control signal to instruct the pump 9 to move the fluid within the input line 12 (e.g., the air as well as any remaining rinse liquid and/or any remaining sample fluid) towards the filter and output the generated control signal to the pump 9. With step S24, the sample fluid and/or the rinse liquid remaining in the input line 12 and/or in the filter may pass through the filter with the air. Further, the processor 502 may set the one of the process fluid input valves 24 to a closed state in which the air is prevented from flowing into the input line 12 in the end of the air flushing step S22 (e.g., after a certain period of time). After step S24, the exemplary process may proceed to step S26.

At step S26, the processor 502 may control the sample preparation system 1 to eject the filter (e.g., step (c11) of the exemplary clarification process as described above). For example, the processor 502 may control the filter handling device 27 (see e.g., Figs. 2 and 3) to remove the filter from the first means 2. More specifically, the processor 502 may generate and output to the filter handling device 27 a control signal to remove the filter from the first means 2 by receiving the filter. Accordingly, the filter may be automatically removed from the fluid path of the sample preparation system 1. After step S26, the exemplary process may proceed to step S28.

At step S28, the processor 502 may determine whether or not to set another filter (e.g., a new, unused filter) on the fluid path, e.g., in the first means 2. For example, the processor 502 may determine to set another filter in case a specified exchange condition (e.g., second specified condition) is met and the processor 502 may determine not to set another filter in case the specified exchange condition is not met. The specified exchange condition may include a condition regarding an amount of remaining sample fluid to be processed by the sample preparation system 1. For example, a threshold for the amount of the remaining sample fluid may be specified (e.g., by a user) and the specified exchange condition is determined to be met in case the amount of the remaining sample fluid is above the threshold.

In case the processor 502 determines to set another filter (YES at step S28), the exemplary process may proceed to step S30.

At step S30, the processor 502 may control the sample preparation system 1 to set a new filter (e.g., unused filter) on the fluid path, e.g., in the first means 2. For example, the processor 502 may generate and output to the filter handling device 27 a control signal to set the new filter in the first means 2. After step S30, the exemplary process may return to step S12.

In case the processor determines not to set another filter (NO at step S28), the exemplary process may end.

After or in parallel to the exemplary process shown in Fig. 7, the processor 502 may perform further control process(es) to control the sample preparation system 1 to perform the purification process using the second means 3a (e.g., purification filter or purification chromatography column), to direct fluid from the first means 2 or the second means 3 towards the output cup 23 or the waste vessel, to clean the sample preparation system 1, etc.

## Experimental Results

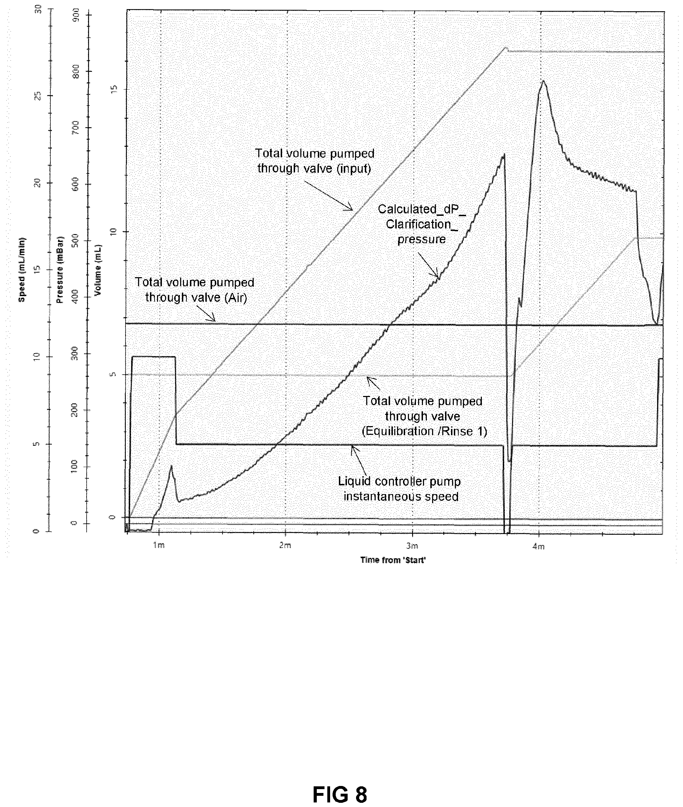

**Fig. 8** shows a graph of exemplary recorded online data obtained by running the exemplary sample preparation system controlled with the control process according to the present disclosure. In the example shown in Fig. 8, the control device 50 performed the exemplary process shown in Fig. 7, using the linear regression function (1) stated above with the specified time period of 10 seconds or 2 ml change of the volume of fluid introduced into the fluid path. As can be seen from Fig. 8, the filter stops processing culture at 650 mbar so as not to reach the 1000 mbar limit before flowing the entirety of the rinse liquid. The differential pressure ("Calculated_dp_Clarification_Pressure" in Fig. 8) increases up to 800 mbar during the rinse but does not block the filter and the flow rate ("Liquid controller pump instantaneous speed" in Fig. 8) remains at the setpoint.

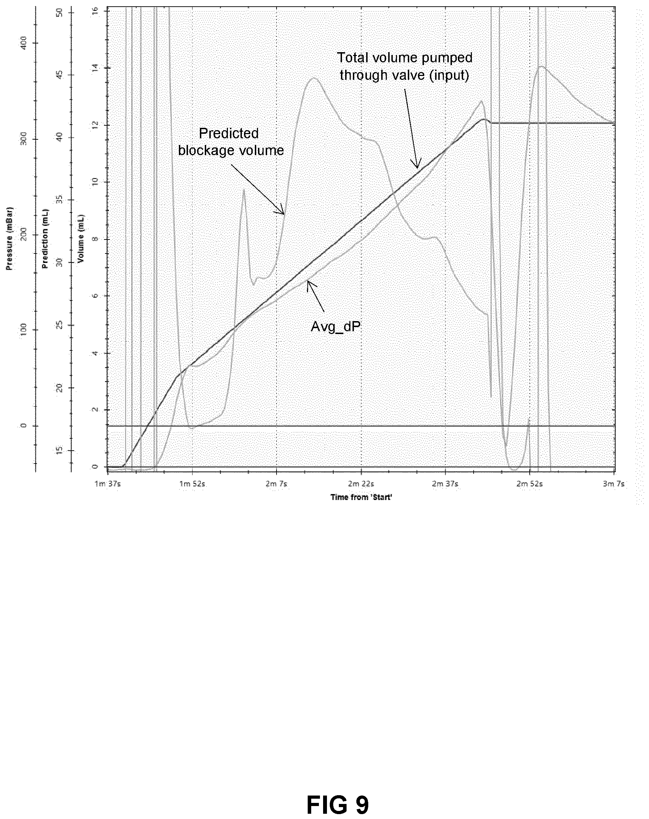

**Fig. 9** shows a graph showing blockage volume of a filter provided on a fluid path of the sample preparation system, predicted in the control process according to the present disclosure, as well as the volume pumped through the input sample valve 14 and the differential pressure across the filter, where the control device 50 performed the exemplary process of Fig. 7, using the linear regression function (1) stated above with the specified time period of 10 seconds or 2 ml change of the volume of fluid introduced into the fluid path. The maximum differential pressure was 1000 mbar. In this example of Fig. 9, the specified threshold was not met by the difference between the predicted filter blockage volume and the current sample volume. In other words, the sample fluid ran out and no filter blockage occurred.

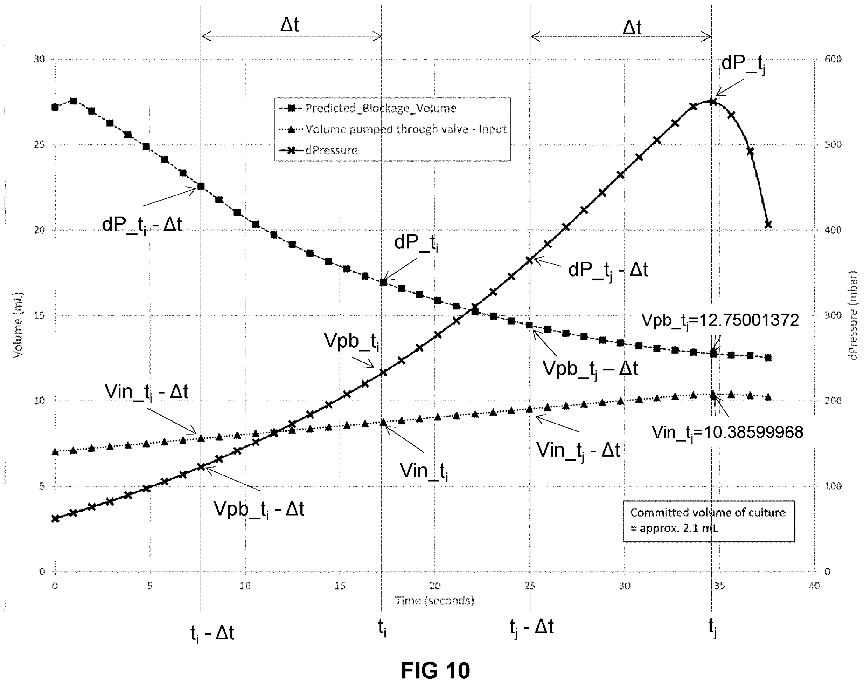

**Fig. 10** shows a further exemplary graph showing blockage volume of a filter provided on a fluid path of the sample preparation system, predicted in the control process according to the present disclosure, as well as the volume pumped through the input sample valve 14 and the differential pressure across the filter, where the control device 50 performed the exemplary process of Fig. 7, using the linear regression function (1) as stated above. The maximum differential pressure was set to 1000 mbar. As can be seen from Fig. 10, the difference between the actual input sample volume (indicated as "Volume pumped through valve - Input") and the predicted filter blockage volume (indicated as Predicted_Blockage_Volume) converge towards a value smaller than that in the start of the process. Accordingly, the specified threshold was met by the difference and the sample preparation system was controlled to stop flow of the sample fluid into the fluid path.

Fig. 10 further shows two exemplary time periods $t_i-\Delta t$ to $t_i$ and $t_j-\Delta t$ to $t_j$ which may be used in determining regression functions in two different iterations of steps S14, S16 and S18 of the exemplary process of Fig. 7. For example, the differential pressures $dP\_t_i-\Delta t$, ..., $dP\_t_i$ and the input volumes $Vin\_t_i-\Delta t$, ..., $Vin\_t_i$ obtained for the time period $t_i-\Delta t$ to $t_i$ may be used for determining the regression function at the time point $t_i$ (or a time point later than the time point $t_i$). Further, the regression function determined at the time point $t_i$ (or the time point later than the time point $t_i$) may be used to calculate the predicted blockage volume $Vpb\_t_i$ at the time point $t_i$ (or the predicted blockage volume $Vpb$ at the time point later than the time point $t_i$). Similarly, for example, the differential pressures $dP\_t_j-\Delta t$, ..., $dP\_t_j$ and the input volumes $Vin\_t_j-\Delta t$, ..., $Vin\_t_j$ obtained for the time period $t_j-\Delta t$ to $t_j$ may be used for determining the regression function at the time point $t_j$ (or a time point later than the time point $t_j$). Further, the regression function determined at the time point $t_j$ (or the time point later than the time point $t_j$) may be used to calculate the predicted blockage volume $Vpb\_t_j$ at the time point $t_j$ (or the predicted blockage volume $Vpb$ at the time point later than the time point $t_j$).

In the specific example of Fig. 10, the specified stopping condition (cf. step S18 of Fig. 7) was met at the time point $t_j$. Thus, the differential pressures $dP$ after the time point $t_j$ decreased as the sample preparation system 1 was controlled to stop introducing the sample fluid into the fluid path. Further, the input sample volumes $Vin$ after the time point $t_j$ also slightly decreased as the pump 9 was controlled to release the differential pressure.

## Variations

In the exemplary embodiments described above, the sample preparation system 1 as shown in Fig. 1 is controlled by the control device 50.

In further exemplary embodiments, a sample preparation system having a configuration different from the example shown in Fig. 1 may be controlled by the control device 50. For example, the sample preparation system to be controlled may comprise a unit configured to perform clarification but not a unit configured to perform purification.

Further, in some exemplary embodiments, a sample preparation system to be controlled may be configured to perform filtration operation other than clarification process. In such a case, the filter provided on the fluid path is not a clarification filter but a filter for a different filter operation. For example, the sample preparation system may perform any biological filtration process of biomolecules using a filter such as syringe filter, ultrafiltration filter, membrane filter, glass and quartz microfiber filter, syringeless filter, filter paper, hollow fiber filter, or the like. Further, for example, in cases where a membrane filter is used, the filter may have different molecular weight cut-offs (MWCOs) depending on the purpose of the filtration operation, e.g., 1 kDa, 5 kDa, 10 kDa, 30 kDa, 50 kDa, 100 kDa, 300 kDa, 500 kDa, 0.2 $\mu$M.

Further, in some exemplary embodiments, the sample preparation system to be controlled may comprise more than one serial arrangement of the first means 2 and the second means 3, in other words, more than one serial arrangement of units for different unit operations (e.g., clarification and purification). In particular, each of these serial arrangements may have the same configuration as the serial arrangement described above with regards to the sample preparation system 1 shown in Fig. 1. In case more than one serial arrangement is present in the sample preparation system, the serial arrangements may be arranged parallel to each other, and each of the serial arrangements may have its own input cup and output cup to allow independent operation. Further, the control device 50 may perform the exemplary process shown in Fig. 7 for each of the serial arrangements in parallel.

Further, in the exemplary embodiments described above, the sample preparation system to be controlled comprises an input sample valve that allows or prevents the sample fluid to flow or from flowing into the fluid path of the sample preparation system. In further exemplary embodiments, allowing or preventing the sample fluid to flow or from flowing into the fluid path may be achieved only by controlling pumps on the fluid path without a valve. In such further exemplary embodiments, a dedicated pump may be provided on each of input fluid lines (e.g., for the sample fluid and for different kinds of process fluid) without a valve. The input fluid lines may be connected together at downstream of the pumps to form a single downstream fluid line and a liquid sensor may be provided on the single downstream line. The fluid to be pumped into the fluid path of the sample preparation system may be selected by activating the corresponding pump while deactivating the other pumps.

Further, in the exemplary embodiments described above, the regression functions (1), (2) and/or (3) may be used. In further exemplary embodiments, an improved predictive model for predicting the filter blockage amount may be used. For example, the predictive model may be improved by identifying samples that are replicates and enabling machine learning (e.g., neural networks, fuzzy logic) so that the predictive model improves from sample to sample. The model may also have a potential to improve its predictive power by incorporating complex filter blockage formulae (e.g. cake-adsorption models, etc).

Further, the predictive model may consider all tube length of the sample preparation system and dead volumes (including that of the clarification filter) which can allow the predictive model to be implemented with different systems and different filters.

Further, in some exemplary embodiments, predictive filter blocking data may be generated across multiple platforms, filters and scales, thereby enabling a fully automated scaling software platform for filtration.

## Hardware Configuration

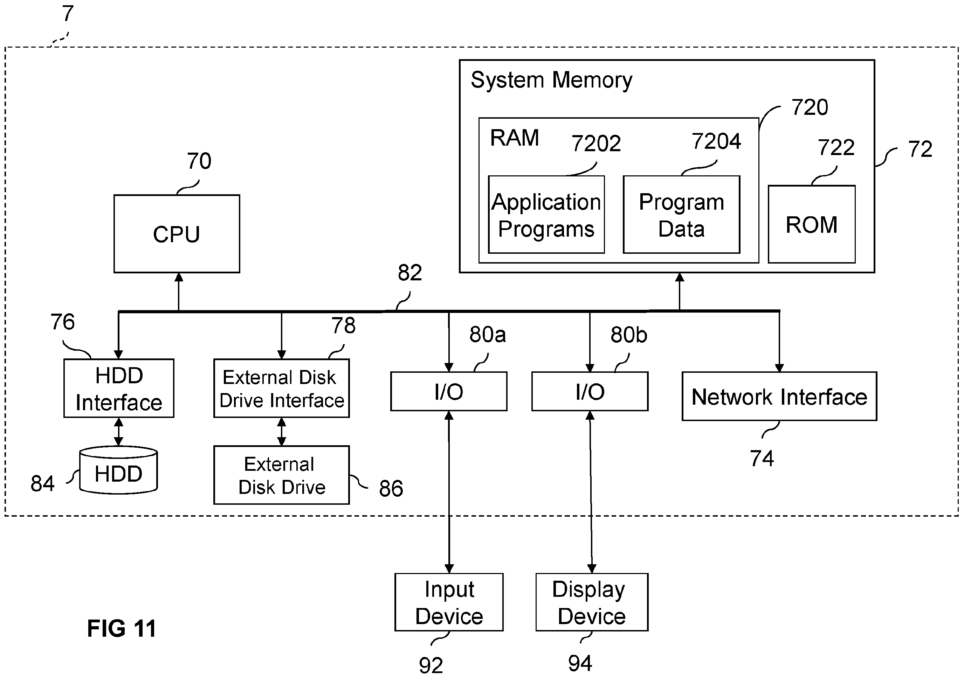

**Fig. 11** shows an exemplary hardware configuration of a computer that may be used to implement at least a part of the system as described above. For example, at least a part of the control device 50 shown in Fig. 5 may be implemented with the computer 7 shown in Fig. 11. The computer 7 shown in Fig. 11 includes a central processing unit (CPU) 70, a system memory 72, a network interface 74, a hard disk drive (HDD) interface 76, an external disk drive interface 78 and input/output (I/O) interfaces 80. These components of the computer are coupled to each other via a system bus 82. The CPU 70 may perform arithmetic, logic and/or control operations by accessing the system memory 72. The system memory 72 may store information and/or instructions for use in combination with the CPU 70. The system memory 72 may include volatile and non-volatile memory, such as a random access memory (RAM) 720 and a read only memory (ROM) 722. A basic input/output system (BIOS) containing the routines that helps to transfer information between elements within the computer 7, such as during start-up, may be stored in the ROM 722. The system bus 82 may be any of several types of bus structures including a memory bus or memory controller, a peripheral bus, and a local bus using any of a variety of bus architectures.

The computer may include a network interface 74 for communicating with other computers and/or devices via a network.

Further, the computer may include a hard disk drive (HDD) 84 for reading from and writing to a hard disk (not shown), and an external disk drive 86 for reading from or writing to a removable disk (not shown). The removable disk may be a magnetic disk for a magnetic disk drive or an optical disk such as a CD ROM for an optical disk drive. The HDD 84 and the external disk drive 86 are connected to the system bus 82 by a HDD interface 76 and an external disk drive interface 78, respectively. The drives and their associated computer-readable media provide non-volatile storage of computer-readable instructions, data structures, program modules and other data for the general purpose computer. The data structures may include relevant data for the implementation of the exemplary method and its variations as described herein. The relevant data may be organized in a database, for example a relational or object database.

Although the exemplary environment described herein employs a hard disk (not shown) and an external disk (not shown), it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 722 or RAM 720, including an operating system (not shown), one or more application programs 7202, other program modules (not shown), and program data 7204. The application programs may include at least a part of the functionality as described above.

The computer 7 may be connected to an input device 92 such as mouse and/or keyboard and a display device 94 such as liquid crystal display, via corresponding I/O interfaces 80a and 80b as well as the system bus 82. In case the computer 7 is implemented as a tablet computer, for example, a touch panel that displays information and that receives input may be connected to the computer 7 via a corresponding I/O interface and the system bus 82. Further, in some examples, although not shown in Fig. 11, the computer 7 may further be connected to a printer and/or an imaging device such as a camera, via corresponding I/O interfaces and the system bus 82.

In addition or as an alternative to an implementation using a computer 7 as shown in Fig. 11, a part or all of the functionality of the exemplary embodiments described herein may be implemented as one or more hardware circuits. Examples of such hardware circuits may include but are not limited to: Large Scale Integration (LSI), Reduced Instruction Set Circuits (RISC), Application Specific Integrated Circuit (ASIC) and Field Programmable Gate Array (FPGA).

## Further Aspects

The following items provide further aspects of the present disclosure:

Item 1. A sample preparation system comprising:

a serial arrangement of a first means configured to being connected to a first consumable and a second means configured to being connected to a second consumable;
a first valve arranged between the first means and the second means;
a second valve arranged downstream of the second means;

a first line providing fluidic communication between the first means and the first valve;
a second line providing fluidic communication between the first valve and the second valve via the second means;
a third line providing fluidic communication directly between the first valve and the second valve configured to bypass the second means; and
a pump configured to move fluid within the sample preparation system.

Item 2. The sample preparation system according to item 1,
wherein the first means is configured to being connected to the first consumable and to support the first consumable.

Item 3. The sample preparation system according to item 1 or 2,
wherein the second means is configured to being connected to the second consumable and to support the second consumable.

Item 4. The sample preparation system according to any one of items 1 to 3,
wherein the first consumable is a first filter.

Item 5. The sample preparation system according to any one of items 1 to 4,
wherein the second consumable is a second filter or a chromatography column.

Item 6. The sample preparation system according to any one of items 1 to 5,
wherein the first means is a first filter holder.

Item 7. The sample preparation system according to any one of items 1 to 6, further comprising:
a consumable handling device connected to the first means configured to provide a first consumable to the first means and to receive a first consumable from the first means.

Item 8. The sample preparation system according to item 7,

further comprising an input line providing fluidic communication between an input cup arranged upstream of the first means and the first means,
wherein the consumable handling device comprises a connecting means configured to connect the input line and the first line for providing fluidic communication between the input line and the first line.

Item 9. The sample preparation system according to item 8, further comprising an input sample valve located downstream of the input cup and upstream of the first means on the input line.
Item 10. The sample preparation system according to any one of items 1 to 9, further comprising a target substance detecting sensor arranged downstream of the second means configured to detect a target substance.
Item 11. A method for preparing a sample using the sample preparation system according to any one of items 1 to 10,
wherein the method comprises at least one of the following steps:

(i) clarifying the sample by passing it through a first consumable connected to the first means to provide a clarified sample, wherein the first consumable is a clarification filter and
(ii) purifying the sample by passing it through a second consumable connected to the second means to provide a purified sample, wherein the second consumable is a purification filter or a purification chromatography column.

Item 12. The method for preparing a sample according to item 11,
wherein the method comprises steps (i) and (ii), and step (i) is carried out before step (ii), wherein the clarified sample immediately flows from the clarification filter to the purification filter or the purification chromatography column.
Item 13. The method for preparing a sample according to item 12,
wherein the method further comprises between step (i) and step (ii), the below steps in the following order:

(a) ejecting the clarification filter,
(b) providing a flow-through path within the first means which connects a line upstream of the first means and the first line of the sample preparation system, and
(c) removing sample from the line upstream of the first means by directing said sample through the flow-through path, the first line and the third line of the sample preparation system.

Item 14. The method for preparing a sample according to any one of items 11 to 13,

wherein the sample is a cell culture comprising a protein,
the clarification filter is a cell culture clarification filter, and
the purification filter is a protein purification filter or a protein purification chromatography column.

Item 15. The method for preparing a sample according to any one of items 11 to 14,
wherein, in step (i), the clarification filter is automatically ejected from the first means and automatically replaced by a new clarification filter.

**Claims**

1. A computer-implemented method for controlling a sample preparation system (1) for preparing a chemical, pharmaceutical and/or biotechnological sample, the sample preparation system (1) comprising a fluid path and at least one consumable (2a) such as a filter provided on the fluid path, the method comprising:

   controlling the sample preparation system (1) so that sample fluid including a target substance flows within the fluid path through the at least one consumable (2a), wherein the sample fluid is allowed to pass an upstream point within the fluid path, the at least one consumable (2a) and a downstream point within the fluid path in this order;
   obtaining (S14) system information at least indicative of:

   an amount of the sample fluid that has been introduced into the fluid path; an upstream pressure at the upstream point; and
   a downstream pressure at the downstream point;

   determining (S16) a regression function using the system information obtained with respect to a specified time period ($\Delta t$) preceding a current point in time ($t_{current}$), the regression function being determined by assuming that:

   differential pressures ($dP\_t_i - \Delta t, \ldots, dP\_t_i$) across the at least one consumable (2a), based on upstream pressures and downstream pressures, obtained for different points in time ($t_i - \Delta t, \ldots, t_i$) within the specified time period ($\Delta t$) are values of a dependent variable (y) of the regression function, and
   amounts ($Vin\_t_i - \Delta t, \ldots, Vin\_t_i$) of the sample fluid introduced into the fluid path obtained for different points in time ($t_i - \Delta t, \ldots, t_i$) within the specified time period ($\Delta t$) are values of an independent variable (x) of the regression function;

   determining (S18) whether or not a first specified condition is met, wherein the first specified condition is determined to be met when a value indicative of a predicted blockage amount (Vpb) corresponds to the amount ($Vin\_t_{current}$) of the sample fluid that has been introduced into the fluid path at the current point in time ($t_{current}$), wherein the predicted blockage amount (Vpb) is a value of the independent variable (x) of the regression function when a value of the dependent variable (y) is a specified maximum differential pressure;
   in case the first specified condition is met, controlling (S20) the sample preparation system (1) to stop introducing the sample fluid into the fluid path;
   in case the first specified condition is not met,

   controlling the sample preparation system (1) to continue introducing the sample fluid into the fluid path, and repeating the steps of obtaining (S14) system information, determining (S16) the regression function and determining (S18) whether or not the first specified condition is met.

2. The method according to claim 1, further comprising:
   in case the first specified condition is met, further controlling the sample preparation system (1) so that rinse liquid flows within the fluid path through the at least one consumable (2a).

3. The method according to claim 1 or 2, further comprising:
   in case the first specified condition is met, further controlling the sample preparation system (1) so that air flows within the fluid path through the at least one consumable (2a).

**4.** The method according to any one of the preceding claims, further comprising:
in case the first specified condition is met, further controlling the sample preparation system (1) to remove the at least one consumable (2a) from the fluid path.

**5.** The method according to claim 4, further comprising:
after controlling the sample preparation system (1) to remove the at least one consumable (2a) from the fluid path, controlling the sample preparation system (1) to provide a new consumable (2a) on the fluid path.

**6.** The method according to claim 5, wherein the controlling of the sample preparation system (1) to provide a new consumable on the fluid path is performed in case a second specified condition is met; and
wherein the second specified condition may include a condition regarding an amount of remaining sample fluid to be processed by the sample preparation system (1).

**7.** The method according to claim 5 or 6, wherein the at least one consumable (2a) is a filter;

wherein the sample preparation system (1) further comprises a filter handling device (27) configured to:

receive the at least one consumable (2a) provided on the fluid path; and
provide the at least one consumable (2a) on the fluid path;

wherein the controlling of the sample preparation system (1) to remove the at least one consumable (2a) from the fluid path includes outputting, to the filter handling device (27), a control signal to remove the at least one consumable (2a) from the fluid path by receiving the at least one consumable (2a); and
wherein the controlling of the sample preparation system (1) to provide the new consumable (2a) on the fluid path includes outputting, to the filter handling device (27), a control signal to provide the new consumable (2a) on the fluid path.

**8.** The method according to any one of the preceding claims, wherein the sample preparation system (1) further comprises a pump (9) configured to move fluid within the fluid path;

wherein the controlling of the sample preparation system (1) so that the sample fluid flows within the fluid path through the at least one consumable (2a) includes outputting, to the pump (9), a control signal to move the sample fluid within the fluid path towards the at least one consumable (2a); and
wherein the controlling of the sample preparation system (1) to stop introducing the sample fluid into the fluid path includes outputting, to the pump (9), a control signal to stop moving the sample fluid within the fluid path.

**9.** The method according to any one of the preceding claims, wherein the sample preparation system (1) further comprises a valve (14) configured to switch between at least:

an open state in which the sample fluid is allowed to flow within the fluid path towards the at least one consumable (2a); or
a closed state in which the sample fluid is prevented from flowing within the fluid path towards the at least one consumable (2a); and
wherein the controlling of the sample preparation system (1) so that the sample fluid flows within the fluid path through the at least one consumable (2a) includes outputting, to the valve (14), a control signal to set the valve (14) to the open state; and
wherein the controlling of the sample preparation system (1) to stop introducing the sample fluid into the fluid path includes outputting, to the valve (14), a control signal to set the valve (14) to the closed state.

**10.** The method according to any one of the preceding claims, wherein the determining of the regression function includes:

obtaining one or more values of one or more parameters relating to the sample fluid and/or the sample preparation system (1);
generating, for each one of the one or more parameters, an equation to determine a blockage amount as a function of the one of the one or more parameters, the blockage amount indicating an amount of the sample fluid that can cause the at least one consumable (2a) to block flow of the sample fluid when introduced into the at least one consumable;
determining, for each one of the one or more parameters, a coefficient indicating a ratio between:

the amount (Vin_$t_{current}$) of the sample fluid that has been introduced into the fluid path at the current point in time ($t_{current}$) or a total amount of the sample fluid to be introduced into the fluid path, and the blockage amount obtained using the generated equation; and

determining the regression function using the coefficient determined for each one of the one or more parameters; and

wherein the one or more parameters may include one or more of the following:

cell density of the sample fluid;
turbidity of the sample fluid;
particle size distribution of the sample fluid;
optical density of the sample fluid;
filter resistance index, where the at least one consumable is a filter;
filter surface area, where the at least one consumable is a filter.

11. The method according to claim 10, wherein the determining of the regression function using the coefficient determined for each one of the one or more parameters includes:

determining a sensitivity factor using the coefficient determined for each one of the one or more parameters; and
select, from among a plurality of types of regression functions, one type of regression function to be used as the regression function, based on the sensitivity factor.

12. The method according to any one of the preceding claims, wherein the sample preparation system (1) is for preparing a sample that is a cell culture comprising a protein; and
wherein the sample fluid is the cell culture and the protein comprised in the cell culture is the target substance.

13. A computer program product comprising computer-readable instructions that, when loaded and run on a suitable system, cause the system to perform the method according to any one of the preceding claims.

14. A control device (50) comprising:

a processor (502) configured to perform the method according to any one of claims 1 to 12; and
a storage medium (504) in communication with the processor.

15. A system comprising:

a sample preparation system (1) comprising:

a fluid path, and
at least one consumable (2a) such as a filter provided on the fluid path; and

the control device (50) according to claim 14.

EP 4 293 435 A1

FIG 1

27

FIG 2

27

29

28

# FIG 3

**FIG 4**

**FIG 5**

**FIG 6**

**FIG 7**

**FIG 8**

**FIG 9**

**FIG 10**

36

**FIG 11**

EP 4 293 435 A1

Europäisches
Patentamt

European
Patent Office

Office européen
des brevets

# EUROPEAN SEARCH REPORT

**Application Number**

EP 22 17 9534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/054960 A1 (PAULENZ CHRISTIAN [DE] ET AL) 24 February 2022 (2022-02-24) | 1,4-15 | INV.<br>G05B17/02<br>G01N1/40 |
| Y | * figure 4 *<br>* paragraph [0070] *<br>* paragraph [0083] *<br>* paragraph [0005] *<br>----- | 2,3 | |
| A | Payne Lee: "Know when to Use Open- vs Closed- Loop Controls",<br>,<br>17 August 2017 (2017-08-17), pages 1-9, XP093000961,<br>Retrieved from the Internet:<br>URL:https://www.controleng.com/articles/know-when-to-use-open-or-closed-loop-control/<br>[retrieved on 2022-11-22]<br>* page 3 *<br>----- | 1-15 | |
| Y | US 5 840 253 A (CHASE ERIC [US] ET AL) 24 November 1998 (1998-11-24) | 2,3 | TECHNICAL FIELDS SEARCHED (IPC) |
| A | * column 5 *<br>----- | 1,4-15 | G01N<br>G05B |
| A | "CHAPTER 4: How Flow Cytometers Work ED – Howard M Shapiro",<br>1 January 2003 (2003-01-01), PRACTICAL FLOW CYTOMETRY, WILEY-LISS, HOBOKEN, NJ, PAGE(S) 101 – 223, XP009145731,<br>ISBN: 978-0-471-41125-3<br>* the whole document *<br>----- | 1-15 | |

The present search report has been drawn up for all claims

| Place of search | Date of completion of the search | Examiner |
|---|---|---|
| The Hague | 29 November 2022 | Antonopoulos, A |

EPO FORM 1503 03.82 (P04C01)

## ANNEX TO THE EUROPEAN SEARCH REPORT
## ON EUROPEAN PATENT APPLICATION NO.

**EP 22 17 9534**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-11-2022**

| Patent document cited in search report | | Publication date | Patent family member(s) | | Publication date |
|---|---|---|---|---|---|
| US 2022054960 | A1 | 24-02-2022 | CN 113164843 | A | 23-07-2021 |
| | | | DE 102018132710 | A1 | 18-06-2020 |
| | | | EP 3897913 | A1 | 27-10-2021 |
| | | | US 2022054960 | A1 | 24-02-2022 |
| | | | WO 2020126384 | A1 | 25-06-2020 |
| US 5840253 | A | 24-11-1998 | DE 69735237 | T2 | 02-11-2006 |
| | | | EP 0938257 | A1 | 01-09-1999 |
| | | | ES 2256892 | T3 | 16-07-2006 |
| | | | JP 3847348 | B2 | 22-11-2006 |
| | | | JP 2000516099 | A | 05-12-2000 |
| | | | US 5840253 | A | 24-11-1998 |
| | | | US 6235537 | B1 | 22-05-2001 |
| | | | WO 9819528 | A1 | 14-05-1998 |

EPO FORM P0459

For more details about this annex : see Official Journal of the European Patent Office, No. 12/82